# EUROPEAN PATENT APPLICATION

(11) **EP 4 693 093 A1**
(43) Date of publication of application: **11.02.2026**
(21) Application number: 24777403.7
(22) Date of filing: 05.01.2024
(51) Int. Cl.: G06F 40/151

(54) **DATA PROCESSING METHOD, BEHAVIOR DETECTION METHOD, AND RELATED DEVICE**

(30) Priority: 27.03.2023 CN 202310347659
(71) Applicant: Shenzhen Yinwang Intelligent Technologies Co., Ltd., Shenzhen, Guangdong 518110 (CN)
(72) Inventor: SONG, Sida, Shenzhen, Guangdong 518129 (CN); MA, Sha, Shenzhen, Guangdong 518129 (CN)
(74) Representative: Maiwald GmbH
(86) International application number: PCT/CN2024/070799
(87) International publication number: WO 2024/198607

(57) **Abstract**

A data processing method, a behavior detection method, and a related apparatus are disclosed, and are applied to the fields of language processing and autonomous driving. In this application, a description of a physical position may be represented by using a position operator, to enrich an expression capability of a logical symbol, and improve accuracy of converting a natural language text into a logical language text. Further, the natural language text may be a text indicating a behavior specification. In this case, the logical language text to which the natural language text is converted can be used to efficiently detect whether a behavior of a terminal complies with the behavior specification, thereby improving detection efficiency and accuracy.

## Description

This application claims priority to Chinese Patent Application No. 202310347659.3, filed with the China National Intellectual Property Administration on March 27, 2023 and entitled "DATA PROCESSING METHOD, BEHAVIOR DETECTION METHOD, AND RELATED APPARATUS", which is incorporated herein by reference in its entirety.

### TECHNICAL FIELD

This application relates to the fields of language processing and autonomous driving, and in particular, to a data processing method, a behavior detection method, and a related apparatus.

### BACKGROUND

A language is an important tool for communication and thinking of human beings. A language daily used by human beings is referred to as a natural language. Human beings express ideas, communicate with each other, describe objects, and the like with natural languages. However, a meaning in a text in a form of natural language is difficult to be directly understood by a machine. If the machine needs to be able to understand the meaning in the language, the text in the form of natural language needs to be converted into a logical language text that can be understood by the machine. The logical language text describes, in a form of logical language, a meaning that can be understood by the machine. In logical semantics, a process of converting a natural language into a logical language is logically deducing a meaning described in a text, to associate the meaning in the language with a symbol in the logical language and a meaning of the symbol.

Propositional logic is an important concept in the field of logical language, and a logical operator and an atomic proposition are combined in the propositional logic to form a formula representing a "proposition". The proposition is a statement with a unique truth value. For example, for a proposition "A speed of a vehicle meets a speed limit requirement", if a vehicle speed of a vehicle is greater than a speed limit, a truth value of the proposition is false. Propositions can be classified into atomic propositions and compound propositions. An atomic proposition is a proposition that cannot be divided. A compound proposition is a proposition formed by connecting atomic propositions by operators.

In a process of converting a natural language text into a logical language text, some concepts cannot be converted accurately. For example, a natural language text "A vehicle turns on a turn signal three seconds in advance" includes a description of time "three seconds". To describe time semantics, linear temporal logic (Linear temporal logic, LTL) is proposed, and a temporal event can be represented by a temporal operator. Metric temporal logic (Metric Temporal Logic, MTL) is a further extension of the LTL, and enriches the temporal operator.

However, it is still difficult to convert some semantics through a logical operator and a temporal operator. For example, some natural language texts are often related to a description of a distance, for example, "Turn on a right turn signal at a 500 m exit sign." Because it is unclear how long a vehicle arrives at an exit after the 500-meter exit sign, a temporal operator cannot be used for a direct description. Even if the description of the distance is converted into a logical language by using the temporal operator, a more complex proposition needs to be designed.

### SUMMARY

Embodiments of this application provide a data processing method, a behavior detection method, and a related apparatus, to enrich an expression capability of a logical symbol, and improve accuracy of converting a natural language text into a logical language text.

According to a first aspect, an embodiment of this application provides a data processing method, including:
obtaining a natural language text, where the natural language text includes a description of a physical position; and
determining, based on the natural language text, a logical language text for detecting a detected object, where the logical language text includes a position operator, and the position operator represents an event at the physical position.

In this embodiment of this application, the description of the physical position in the natural language text may be represented by using the position operator. For example, "Turn on a right turn signal at a 500 m exit sign" may be represented by " G_{pos(0, 500)} (The vehicle turns on the right turn signal) ", where G_{pos(0, 500)} represents "always within a distance range", 0 represents a start position (namely, a position of the 500-meter exit sign), and 500 represents an end position (namely, a position of the exit), to indicate whether the vehicle turns on the right turn signal within the 500-meter distance range of the 500-meter exit sign.

It can be learned that a description of a physical position is expressed by using a logical operator. This enriches an expression capability of a logical symbol, and significantly improves accuracy of converting a natural language text into a logical language text. The description of the physical position does not need to be converted into a temporal operator or written in a proposition. This greatly reduces complexity of a proposition in the logical language text.

In addition, in one aspect, a logical language usually has a unique truth value, and therefore can avoid ambiguity and fuzzy semantics in a natural language, and have higher accuracy. In another aspect, semantics described by the logical language text can be understood by a machine. When the logical language text is used by the machine to detect a detected object, detection efficiency and detection accuracy of detection can be greatly improved.

Optionally, the logical language text may further include a proposition. The proposition herein may be an atomic proposition, or may be a compound proposition. Certainly, the compound proposition also includes an atomic proposition.

Optionally, the logical language text may be a character string, an instruction, a statement, a text paragraph, computer program code, a document, or the like expressed in a form of logical language. A storage and transmission format of the text is not strictly limited in this application.

In a possible implementation of the first aspect, the natural language text indicates a behavior specification. The behavior specification refers to a rule that the object should comply with. A behavior generated by an object is usually associated with a position at which the behavior is generated. Therefore, the behavior specification is often related to the description of the physical position.

The behavior specification in a form of natural language is converted into a behavior specification in the logical language form, to improve accuracy of an expression of the behavior specification.

Optionally, the behavior specification may be a behavior rule defined by an individual or an organization, for example, a rule (for example, a traffic rule) that should be complied with by a motor vehicle, a traffic rule that should be complied with by a non-motor vehicle, a rule that should be complied with by a pedestrian, and a navigation rule of an uncrewed aerial vehicle.

In still another possible implementation of the first aspect, the logical language text is used to judge whether the detected object complies with the behavior specification.

In one aspect, the expression of the logical language text is more accurate, and therefore behavior detection accuracy can be improved. In another aspect, the logical language can be understood by the machine. Therefore, whether the detected object complies with the behavior specification can be detected by the machine, thereby improving behavior detection efficiency, and machine detection can further improve behavior detection accuracy.

In a possible implementation of the first aspect, determining, based on the natural language text, the logical language text for detecting the detected object includes:
determining a normalized text based on the natural language text; and
determining, based on the normalized text, the logical language text for detecting the detected object.

There are some fuzzy semantics and unclear descriptions in the natural language text, for example, keep a sufficient safe distance, and turn on a turn signal in advance. Information, for example, how far is the distance sufficient, and before how long the signal is turned on, needs to be specified. The fuzzy semantics and unclear descriptions are converted into a statement without ambiguity and clear semantics, namely, the normalized text, to improve the accuracy of the expression. For example, the sufficient safe distance is converted to a time duration of three seconds, and turn on in advance is explicitly specified as turn on three seconds in advance. The normalized text may form the logical language text with a clear meaning through language conversion, thereby further improving the accuracy of the expression.

In still another possible implementation of the first aspect, the position operator includes at least one of the following operators:
previous position Xₚᵣₑₚₒₛ, next position Xₚₒₛ, until Uₚᵣₑₚₒₛ, reverse until Uₚₒₛ, direction always Gₚᵣₑₚₒₛ, always Gₚₒₛ, once Fₚᵣₑₚₒₛ, finally Fₚₒₛ, always G_{_{pos(p1, p2)}} within a distance range from a first value p₁ to a second value p₂, and existing F_{pos(p1, p2)} within a distance range from a first value p₁ to a second value p₂, where the first value and the second value are position parameters.

In this implementation, the position operator may describe an event on a path starting from a given position.

As an example, a position operator may describe an event at a position on a path. For example, in Xₚᵣₑₚₒₛ(onLaneType(offRamp)), the proposition onLaneType(offRamp) represents whether a lane type is a ramp off a highway. Xₚᵣₑₚₒₛ(onLaneType(offRamp)) represents whether a next position is a ramp off a highway with reference to the distance operator Xₚᵣₑₚₒₛ.

As an example, a position operator may describe an event at a specific distance on a path. For example, G_{pos(0, 500)} (The vehicle turns on the right turn signal) represents whether a vehicle always turns on a turn signal within a distance range of (0, 500).

In still another possible implementation of the first aspect, determining, based on the natural language text, the logical language text for detecting the detected object includes:
determining the logical language text based on the natural language text and specification indication information of a first scenario, where the logical language text is used to detect a behavior of the detected object in the first scenario.

The specification indication information is information related to a behavior specification in the first scenario, for example, content of the behavior specification, a scope of the behavior specification, and temporal validity of the behavior specification. The logical language text applicable to the scenario can be more accurately determined by using the specification indication information, to improve the accuracy of conversion.

Optionally, the specification indication information in the first scenario may be obtained from a map of the first scenario. For example, the first scenario may be a road, and a high-definition map and/or a digital road network include/includes static information of the road, for example, a position of a traffic rule sign board of the road, and an application range of the sign board.

In still another possible implementation of the first aspect, the detected object may be located in the first scenario. Alternatively, the detected object is about to enter the first scenario.

In still another possible implementation of the first aspect, the specification indication information of the first scenario includes an application distance range of the behavior specification in the first scenario, the position operator includes a position parameter, and the position parameter is determined based on the application distance range.

A speed limit scenario is used as an example. A speed limit between a point A and a point B on a road in a first scenario is 50, and in this case a position operator may be determined by using a position including the point A and a position including the point B. For example, one type of specification indication information is, for example, "Highway 500-meter exit sign board: {position: d1}, {application range: [d1, d2]}". In this case, "Turn on a right turn signal at a 500 m exit warning sign" may be represented by "G_{pos(p1, p2)}(The vehicle turns on the right turn signal)", where values of p1 and p2 may be determined by using d1 and d2.

For example, d1=1498, d2=1998, and a distance difference between d2 and d1 is 500. In this case, p1 may be -550 (in consideration of that a position of a sign plate set on a map may not be exactly at 500 m, a distance margin of 50 m is considered herein), and p2 may be 0 (that is, p2 is used as a distance origin).

The specification indication information can be used to automatically perform conversion based on information in the scenario, to obtain the logical language text. This improves flexibility of conversion of the logical language text. When the information in the scenario changes, a parameter in the logical language text may also be correspondingly updated. This greatly improves update efficiency of the logical language text.

In still another possible implementation of the first aspect, the logical language text is used to detect a behavior of the detected object within a first distance range on a first road;
the first distance range includes a start point and an end point in a road coordinate system of the first road, a positive direction of the road coordinate system represents a normal traveling direction along the first road, and the road coordinate system includes an origin; and
the position operator includes a first value and a second value, the first value is a distance between the start point and the origin in the normal traveling direction of the first road, and the second value is a distance between the end point and the origin in the normal traveling direction of the first road.

Because driving routes of a vehicle on a road may be various, in the foregoing implementation, a distance standard and a direction are unified by using the road coordinate system, to improve accuracy and consistency of a description.

In still another possible implementation of the first aspect, the origin is a current position of the detected object or a position of a projection of a current position of the detected object onto the road coordinate system.

Optionally, the origin may be an application start point of the behavior specification, for example, an application start point and an application end point of a sign board. Alternatively, the origin may be a position of a sign board.

In still another possible implementation of the first aspect, the logical language text further includes a logical operator. The logical operator may include one or more of negation, conjunction, disjunction, derivation, equivalence, or the like.

In still another possible implementation of the first aspect, the logical language text further includes a temporal operator. The temporal operator may include next X, until U, globally G, finally F, always happen G_{(t1, t2)} within t₁~t₂, and happen F_{(t1, t2)} within t₁~t₂.

In the foregoing implementation, a description of time can be expressed by using the temporal operator. This enriches an expression capability of a logical symbol, and simplifies a proposition design.

According to a second aspect, an embodiment of this application provides a behavior detection method, including:
obtaining behavior information of a terminal; and
determining, based on the behavior information of the terminal and a logical language text, whether a behavior of the terminal complies with a behavior specification, where the logical language text includes a position operator, and the position operator represents an event at a physical position.

In the foregoing implementation, the logical language text includes the position operator, and the position operator may represent the event at the physical position. This not only reduces complexity of the proposition in the logical language text, but also improves semantic accuracy, and can improve detection efficiency and detection accuracy.

Optionally, because a behavior is usually associated with a physical position at which the behavior is performed, the behavior information may include information indicating the position of the behavior.

In a possible implementation of the second aspect, the position operator includes at least one of the following operators:
previous position Xₚᵣₑₚₒₛ, next position Xₚₒₛ, until Uₚᵣₑₚₒₛ, reverse until Uₚₒₛ, direction always Gₚᵣₑₚₒₛ, always Gₚₒₛ, once Fₚᵣₑₚₒₛ, finally Fₚₒₛ, always G_{pos(p1, p2)} within a distance range from a first position to a second position, and existing F_{pos(p1, p2)} within a distance range from a first position to a second position, where the first value and the second value are position parameters.

In still another possible implementation of the second aspect, the method further includes:
sending violation alert information to the terminal when the behavior of the terminal does not comply with the behavior specification, where
the violation alert information indicates information about the behavior specification that is violated and/or indicates how to comply with the behavior specification.

For example, violation alert information may include information about a behavior specification that is violated by a terminal, and/or the violation alert information may indicate the terminal (or a user of the terminal) to comply with a behavior specification. The information about the behavior specification that is violated by the terminal includes, for example, the behavior specification that is violated, time, a place, and a picture of violation, and a punishment (a punishment on a controller of the terminal) for the violation.

For example, a server may perform real-time online detection or offline detection on a behavior of a vehicle, and send violation alert information to a terminal when the terminal does not comply with a behavior specification.

For another example, a detection apparatus is disposed in a terminal, and when detecting that a behavior of the terminal does not comply with a behavior specification, the detection apparatus outputs violation alert information.

In the foregoing implementation, the violation alert may remind a user of the terminal to notice the violation, to reduce the possibility of another violation. For example, a behavior specification is a traffic rule, and a terminal is a vehicle. If the vehicle violates the traffic rule, the possibility of a traffic accident increases, resulting in a property loss. If the vehicle violates a traffic rule a plurality of times and violates a plurality of traffic rules, the life of a passenger may be endangered. A violation alert can increase the restriction of a rule, reduce the possibility of an accident on a smart terminal, and improve personal and property safety.

In still another possible implementation of the second aspect, the method further includes:
sending a control switching indication if violation of the terminal is made by an intelligent driving function, where the control switching indication is used to deactivate the intelligent driving function.

For example, an adaptive cruise control system of a vehicle may accelerate or decelerate the vehicle, or perform another operation. If the adaptive cruise control system is activated, the vehicle is overspeed. In this case, a server or an intelligent driving controller of the vehicle may deactivate adaptive cruise or temporarily lock the adaptive cruise control system, and a driver takes over the vehicle.

In still another possible implementation of the second aspect, the method further includes:
outputting a behavior detection result, where the behavior detection result indicates whether the behavior of the terminal complies with the behavior specification.

The behavior detection result may reflect a degree to which the behavior of the terminal is restricted by the specification, and help remind a controller of the terminal to enhance operation standardization.

In a possible design, during a road test or a closed road test of the terminal, the terminal may be detected based on the behavior specification, and the behavior detection result may be used to analyze intelligence and safety of the terminal, thereby facilitating quality upgrade of the terminal.

In still another possible implementation of the second aspect, the behavior information of the terminal further includes information about an intelligent driving function related to the behavior of the terminal, and the method further includes:
outputting function feedback information when the behavior of the terminal does not comply with the behavior specification, where the function feedback information indicates the intelligent driving function and the behavior specification that is violated by the terminal, and the function feedback information is used to update the intelligent driving function.

In still another possible implementation of the second aspect, a form of the logical language text is: conditional proposition → behavioral proposition, and → represents derivation; and
determining, based on the behavior information of the terminal and the logical language text, whether the behavior of the terminal complies with the behavior specification includes:
determining a logical value of the conditional proposition and a logical value of the behavioral proposition based on the behavior information of the terminal; and
if the conditional proposition is true and the logical value of the behavioral proposition is true, determining that the behavior of the terminal complies with the behavior specification; or
if the conditional proposition is true and the logical value of the behavioral proposition is false, determining that the behavior of the terminal does not comply with the behavior specification.

In still another possible implementation of the second aspect, the logical language text indicates a behavior specification in a first scenario, and determining, based on the behavior information of the terminal and the logical language text, whether the behavior of the terminal complies with the behavior specification includes:
determining, based on the behavior information of the terminal and the logical language text, whether a behavior of the terminal in the first scenario complies with the behavior specification in the first scenario.

In still another possible implementation of the second aspect, the method further includes:
determining the logical language text based on a natural language text and specification indication information of the first scenario, where the natural language text is a behavior specification described in a natural language.

In still another possible implementation of the second aspect, the specification indication information of the first scenario includes an application distance range of the behavior specification in the first scenario, the position operator includes a position parameter, and the position parameter is determined based on the application distance range.

In still another possible implementation of the second aspect, the logical language text is used to detect a behavior of the detected object within a first distance range on a first road;
the first distance range includes a start point and an end point in a road coordinate system of the first road, a positive direction of the road coordinate system represents a normal traveling direction along the first road, and the road coordinate system includes an origin; and
the position operator includes a first value and a second value, the first value is a distance between the start point and the origin in the normal traveling direction of the first road, and the second value is a distance between the end point and the origin in the normal traveling direction of the first road.

In still another possible implementation of the second aspect, the origin is a current position of the detected object or a position of a projection of a current position of the detected object onto the road coordinate system.

Optionally, the origin may be an application start point of the behavior specification, for example, an application start point and an application end point of a sign board. Alternatively, the origin may be a position of a sign board.

In still another possible implementation of the second aspect, the logical language text further includes a logical operator. The logical operator may include one or more of negation, conjunction, disjunction, derivation, equivalence, or the like.

In still another possible implementation of the second aspect, the logical language text further includes a temporal operator. The temporal operator may include next X, until U, globally G, finally F, always happen G_{(t1, t2)} within t₁~t₂, and happen F_{(t1, t2)} within t₁~t₂.

In the foregoing implementation, a description of time can be expressed by using the temporal operator. This enriches an expression capability of a logical symbol, and simplifies a proposition design.

According to a third aspect, an embodiment of this application provides a data processing apparatus. The data processing apparatus is configured to implement the method according to any one of the first aspect or the possible implementations of the first aspect.

In a possible implementation of the third aspect, the data processing apparatus includes an obtaining module and a processing module. Optionally, the obtaining module is configured to complete operations such as obtaining, receiving, and reading, and the processing module is configured to complete functions such as determining, conversion, detection, or projection.

In still another possible implementation of the third aspect, the obtaining module is configured to obtain a natural language text, where the natural language text includes a description of a physical position.

The processing module is configured to determine, based on the natural language text, a logical language text for detecting a detected object, where the logical language text includes an atomic proposition and a position operator, and the position operator represents an event at the physical position.

Optionally, the logical language text may further include a proposition. The proposition herein may be an atomic proposition, or may be a compound proposition. Certainly, the compound proposition also includes an atomic proposition.

Optionally, the logical language text may be a character string, an instruction, a statement, a text paragraph, computer program code, a document, or the like expressed in a form of logical language. A storage and transmission format of the text is not strictly limited in this application.

In a possible implementation of the third aspect, the natural language text indicates a behavior specification.

In still another possible implementation of the third aspect, the logical language text is used to judge whether the detected object complies with the behavior specification.

Determining, based on the natural language text, the logical language text for detecting the detected object includes:
determining a normalized text based on the natural language text; and
determining, based on the normalized text, the logical language text for detecting the detected object.

In still another possible implementation of the third aspect, the position operator includes at least one of the following operators:
previous position Xₚᵣₑₚₒₛ, next position Xₚₒₛ, until Uₚᵣₑₚₒₛ, reverse until Uₚₒₛ, direction always Gₚᵣₑₚₒₛ, always Gₚₒₛ, once Fₚᵣₑₚₒₛ, finally Fₚₒₛ, always G_{pos(p1, p2)} within a distance range from a first value p₁ to a second value p₂, and existing F_{pos(p1, p2)} within a distance range from a first value p₁ to a second value p₂, where the first value and the second value are position parameters.

In still another possible implementation of the third aspect, the processing module is configured to:
determine the logical language text based on the natural language text and specification indication information of a first scenario, where the logical language text is used to detect a behavior of the detected object in the first scenario.

Optionally, the specification indication information in the first scenario may be obtained from a map of the first scenario. For example, the first scenario may be a road, and a high-definition map and/or a digital road network include/includes static information of the road, for example, a position of a traffic rule sign board of the road, and an application range of the sign board.

In still another possible implementation of the third aspect, the detected object may be located in the first scenario. Alternatively, the detected object is about to enter the first scenario.

In still another possible implementation of the third aspect, the specification indication information of the first scenario includes an application distance range of the behavior specification in the first scenario, the position operator includes a position parameter, and the position parameter is determined based on the application distance range.

In still another possible implementation of the third aspect, the logical language text is used to detect a behavior of the detected object within a first distance range on a first road;
the first distance range includes a start point and an end point in a road coordinate system of the first road, a positive direction of the road coordinate system represents a normal traveling direction along the first road, and the road coordinate system includes an origin; and
the position operator includes a first value and a second value, the first value is a distance between the start point and the origin in the normal traveling direction of the first road, and the second value is a distance between the end point and the origin in the normal traveling direction of the first road.

In still another possible implementation of the third aspect, the origin is a current position of the detected object or a position of a projection of a current position of the detected object onto the road coordinate system.

Optionally, the origin may be an application start point of the behavior specification, for example, an application start point and an application end point of a sign board. Alternatively, the origin may be a position of a sign board.

In still another possible implementation of the third aspect, the logical language text further includes a logical operator. The logical operator may include one or more of negation, conjunction, disjunction, derivation, equivalence, or the like.

In still another possible implementation of the third aspect, the logical language text further includes a temporal operator. The temporal operator may include next X, until U, globally G, finally F, always happen G_{(t1, t2)} within t₁~t₂, and happen F_{(t1, t2)} within t₁~t₂.

According to a fourth aspect, an embodiment of this application provides a detection apparatus. The data processing apparatus is configured to implement the method according to any one of the second aspect or the possible implementations of the second aspect.

In a possible implementation of the fourth aspect, the detection apparatus includes an obtaining module and a processing module. Optionally, the obtaining module is configured to complete operations such as obtaining, receiving, and reading, and the processing module is configured to complete functions such as determining, conversion, detection, or projection.

In still another possible implementation of the fourth aspect, the obtaining module is configured to obtain behavior information of a terminal.

The processing module is configured to determine, based on the behavior information of the terminal and a logical language text, whether a behavior of the terminal complies with a behavior specification, where the logical language text includes a position operator, and the position operator represents an event at a physical position.

Optionally, because a behavior is usually associated with a physical position at which the behavior is performed, the behavior information may include information indicating the position of the behavior.

In a possible implementation of the fourth aspect, the position operator includes at least one of the following operators:
previous position Xₚᵣₑₚₒₛ, next position Xₚₒₛ, until Uₚᵣₑₚₒₛ, reverse until Uₚₒₛ, direction always Gₚᵣₑₚₒₛ, always Gₚₒₛ, once Fₚᵣₑₚₒₛ, finally Fₚₒₛ, always G_{pos(p1, p2)} within a distance range from a first position to a second position, and existing F_{pos(p1, p2)} within a distance range from a first position to a second position, where the first value and the second value are position parameters.

In still another possible implementation of the fourth aspect, the behavior detection apparatus further includes a communication module. The communication module is configured to send and/or receive information, and/or is configured to output and/or input information.

In still another possible implementation of the fourth aspect, the communication module is configured to send violation alert information, where the violation alert information may include information of the behavior specification that is violated by the terminal and/or information indicating that a user complies with the behavior specification.

Optionally, the communication module sends violation alert information when the behavior of the terminal does not comply with the behavior specification, or may not send violation alert information if a behavior specification of the terminal does not violate the specification.

In still another possible implementation of the fourth aspect, the communication module is configured to send a control switching indication, where the control switching indication is used to deactivate an intelligent driving function.

Optionally, the communication module sends the control switching indication when the behavior of the terminal does not comply with the behavior specification, or may not send the control switching indication if a behavior specification of the terminal does not violate the specification.

In still another possible implementation of the fourth aspect, the communication module is configured to output a behavior detection result, where the behavior detection result indicates whether the behavior of the terminal complies with the behavior specification.

In still another possible implementation of the fourth aspect, the behavior information of the terminal further includes information about the intelligent driving function related to the behavior of the terminal, and the communication module is configured to:
output function feedback information when the behavior of the terminal does not comply with the behavior specification, where the function feedback information indicates the intelligent driving function and the behavior specification that is violated by the terminal, and the function feedback information is used to update the intelligent driving function.

In still another possible implementation of the fourth aspect, a form of the logical language text is: conditional proposition → behavioral proposition, and → represents derivation; and
the processing module is configured to:
determine a logical value of the conditional proposition and a logical value of the behavioral proposition based on the behavior information of the terminal; and
if the conditional proposition is true and the logical value of the behavioral proposition is true, determine that the behavior of the terminal complies with the behavior specification; or
if the conditional proposition is true and the logical value of the behavioral proposition is false, determine that the behavior of the terminal does not comply with the behavior specification.

In still another possible implementation of the fourth aspect, the logical language text indicates a behavior specification in a first scenario; and the processing module is configured to:
determine, based on the behavior information of the terminal and the logical language text, whether a behavior of the terminal in the first scenario complies with the behavior specification in the first scenario.

In still another possible implementation of the fourth aspect, the processing module is further configured to:
determine the logical language text based on a natural language text and specification indication information of the first scenario, where the natural language text is a behavior specification described in a natural language.

In still another possible implementation of the fourth aspect, the specification indication information of the first scenario includes an application distance range of the behavior specification in the first scenario, the position operator includes a position parameter, and the position parameter is determined based on the application distance range.

In still another possible implementation of the fourth aspect, the logical language text is used to detect a behavior of the detected object within a first distance range on a first road;
the first distance range includes a start point and an end point in a road coordinate system of the first road, a positive direction of the road coordinate system represents a normal traveling direction along the first road, and the road coordinate system includes an origin; and
the position operator includes a first value and a second value, the first value is a distance between the start point and the origin in the normal traveling direction of the first road, and the second value is a distance between the end point and the origin in the normal traveling direction of the first road.

In still another possible implementation of the fourth aspect, the origin is a current position of the detected object or a position of a projection of a current position of the detected object onto the road coordinate system.

Optionally, the origin may be an application start point of the behavior specification, for example, an application start point and an application end point of a sign board. Alternatively, the origin may be a position of a sign board.

In still another possible implementation of the fourth aspect, the logical language text further includes a logical operator. The logical operator may include one or more of negation, conjunction, disjunction, derivation, equivalence, or the like.

In still another possible implementation of the fourth aspect, the logical language text further includes a temporal operator. The temporal operator may include next X, until U, globally G, finally F, always happen G_{(t1, t2)} within t₁∼t₂, and happen F_{(t1, t2)} within t₁~t₂.

According to a fifth aspect, an embodiment of this application provides a data processing apparatus. The data processing apparatus includes a processor and a communication interface, the communication interface is configured to input and/or output data, or the communication interface is configured to send and/or receive data, and the data processing apparatus is configured to implement the method according to any one of the second aspect or the possible implementations of the second aspect.

According to a sixth aspect, an embodiment of this application provides a detection apparatus. The detection apparatus includes a processor and a communication interface, the communication interface is configured to input and/or output data, or the communication interface is configured to send and/or receive data, and the detection apparatus is configured to implement the method according to any one of the second aspect or the possible implementations of the second aspect.

It should be noted that the processor according to the fifth aspect and the sixth aspect may be a processor (referred to as a dedicated processor for ease of differentiation) specially configured to perform these methods, or may be a processor that performs these methods by invoking a computer program (the computer program includes computer instructions or computer instructions may be obtained by using the computer program), for example, a general-purpose processor. Optionally, the at least one processor may further include both a dedicated processor and a general-purpose processor.

Optionally, the computer program may be stored in a memory. For example, a memory may be a non-transitory (non-transitory) memory, for example, a read-only memory (read-only memory, ROM). The memory and a processor may be integrated on a same component, or may be separately disposed on different components. A type of the memory and a manner of disposing the memory and the processor are not limited in embodiments of this application.

In a possible implementation, the at least one memory is located outside the data processing apparatus (or the detection apparatus).

In still another possible implementation, the at least one memory is located in the data processing apparatus (or the detection apparatus).

In still another possible implementation, a part of memory of the at least one memory is located in the data processing apparatus (or the detection apparatus), and the other part of memory is located outside the data processing apparatus (or the detection apparatus).

In this application, the processor and the memory may alternatively be integrated into one component. In other words, the processor and the memory may alternatively be integrated together.

According to a seventh aspect, an embodiment of this application provides a computer-readable storage medium. The computer-readable storage medium stores an instruction, and when the instruction is run on at least one processor, the method according to any one of the first aspect or the possible implementations of the first aspect is implemented, or the method according to any one of the second aspect or the possible implementations of the second aspect is implemented.

According to an eighth aspect, this application provides a computer program product. The computer program product includes computer instructions, and when the instructions are run on at least one processor, the method according to any one of the first aspect or the possible implementations of the first aspect is implemented, or the method according to any one of the second aspect or the possible implementations of the second aspect is implemented.

Optionally, the computer program product may be a software installation package. If the foregoing method needs to be used, the computer program product may be downloaded and executed on a computing device.

According to a ninth aspect, an embodiment of this application provides a terminal. The terminal includes the detection apparatus according to any one of the fourth aspect or the possible implementations of the fourth aspect, or includes the detection apparatus according to the sixth aspect.

Optionally, the terminal may be an intelligent terminal or a transportation means like a vehicle, an uncrewed aerial vehicle, or a robot. Certainly, the terminal may also be replaced with an industrial device, an entertainment device, or the like. The intelligent terminal is, for example, a mobile phone, a tablet computer, a notebook computer, a smart band, a smart watch, or smart glasses. The transportation means is, for example, a vehicle, a ship, aircraft, or a logistics robot. The industrial device is, for example, an industrial robot and a robotic arm. The entertainment device is, for example, a virtual reality (virtual reality, VR) device, a mixed reality (mixed reality, MR) device, a massage chair, or a 4D cinema motion seat pod. A device to which an electrical connector is applied is not strictly limited in this application.

According to a tenth aspect, an embodiment of this application provides a server. The server includes the data processing apparatus according to any one of the third aspect or the possible implementations of the third aspect, or includes the data processing apparatus according to the fourth aspect.

According to an eleventh aspect, an embodiment of this application provides a server. The server includes the detection apparatus according to any one of the fourth aspect or the possible implementations of the fourth aspect, or includes the detection apparatus according to the sixth aspect.

For beneficial effect of some of the technical solutions provided according to the second to the eleventh aspects of this application, refer to the beneficial effect of the technical solution according to the first aspect. Details are not described herein again.

### BRIEF DESCRIPTION OF DRAWINGS

The following briefly describes accompanying drawings used in describing embodiments.
FIG. 1 is a diagram of a behavior detection system according to an embodiment of this application;
FIG. 2 is a diagram of a possible data processing method according to an embodiment of this application;
FIG. 3 is a diagram of a road according to an embodiment of this application;
FIG. 4 is a diagram of another road according to an embodiment of this application;
FIG. 5 is a diagram of a possible behavior detection method according to an embodiment of this application;
FIG. 6 is a diagram of a running scenario of a behavior detection method according to an embodiment of this application;
FIG. 7 is a diagram of a standard behavior reminder according to an embodiment of this application;
FIG. 8 is a diagram of a structure of a data processing apparatus according to an embodiment of this application;
FIG. 9 is a diagram of a structure of a behavior detection apparatus according to an embodiment of this application; and
FIG. 10 is a diagram of a structure of a processing apparatus according to an embodiment of this application.

### DESCRIPTION OF EMBODIMENTS

For ease of understanding, some concepts related to embodiments of this application are described for reference by using examples below. Details are as follows.

### 1. Terminal

A terminal in embodiments of this application is an apparatus having a behavior capability. For example, a terminal may be an apparatus that can move through power driving, for example, a transport apparatus or a transportation means like a vehicle, an uncrewed aerial vehicle, or a wheeled mobile robot. For another example, a terminal may be a mechatronic apparatus, for example, material handling machinery (a crane, a conveyor, or loading and unloading machinery), or an industrial robotic arm.

### 2. Behavior specification

A behavior specification is a rule set to restrict a behavior.

For example, traffic rules are set to maintain a road traffic order, prevent and reduce traffic accidents, and protect personal and property safety. The traffic rules record different levels of violation, and are used to restrict vehicle drivers, pedestrians, passengers, and units and individuals related to road traffic activities.

The traffic rules in embodiments of this application are merely example rules. For example, different countries and regions may comply with different traffic rules. For another example, different road sections are applicable to different traffic rules. For another example, a behavior specification applicable to a detected object may be preset or preset.

### 3. Proposition

A proposition refers to the semantics of a narrative sentence, and can be judged as true or false. For example, a current speed of a vehicle A meets a speed limit requirement. A truth value for a proposition: "A current speed of a vehicle A is greater than a maximum speed limit" is false. A truth value for a proposition: "A current speed of a vehicle A is less than or equal to a maximum speed limit" is true.

Propositions can include atomic propositions and compound propositions. An atomic proposition is a proposition that cannot be divided. A compound proposition is a proposition formed by connecting atomic propositions by operators.

### 4. Logical operator

A logical operator, or a logical connector, can connect propositions into more complex propositions. Refer to Table 1. Logical operators include but are not limited to operators shown in Table 1.

**Table 1 Logical operators and meanings of the logical operators**

| Operator | Meaning |
|---|---|
| ¬ | Negation (not) |
| Λ | Conjunction (and) |
| V | Disjunction (or) |
| → | Derivation and implication (implication) |
| ↔ | Equivalence (equivalence) |

It should be noted that the operators listed in embodiments of this application are forms of some possible operators listed to represent meanings of operations. In a specific implementation process, an operator with a corresponding meaning may be set based on a requirement or may be set by using a specific rule, and is not limited to the form of the operator listed in embodiments of this application. For example, in some scenarios, "&" also represents conjunction. For another example, in some scenarios, "and" represents conjunction.

### 5. Temporal operator

A temporal operator is an operator representing a temporal event. For example, linear temporal logic (linear temporal logic, LTL) introduces an additional operator on the basis of a proposition and a logical connector. In addition, metric temporal logic (metric temporal logic, MTL) is a further extension of the LTL, and enriches the temporal operator.

In a possible example, temporal operators include but are not limited to operators shown in Table 2.

**Table 2 Temporal operators and meanings of the temporal operators**

| Temporal operator | Meaning |
|---|---|
| *X* | Next (next) |
| U | Until (until) |
| G | Globally (always, global) |
| F | Finally (eventually, future) |
| *G*_{(*t*1, *t*2)} | Always happen within *t*₁~*t*₂ |
| *F*_{(*t*1, *t*2)} | Happen within *t*₁~*t*₂ |

Descriptions of examples of the concepts above may be applied below.

In a process of converting a natural language text into a logical language text, some descriptions related to a physical position cannot be accurately converted. For example, "Turn on a right turn signal at a 500 m exit sign". Because it is unclear how long a vehicle arrives at an exit after a 500-meter exit sign, a temporal operator cannot be used for a direct description. Even if the description of the distance is converted into a logical language by using the temporal operator, a more complex proposition needs to be designed.

In view of this, embodiments of this application provide a position operator, a data processing method, a behavior detection method, and a related apparatus. In embodiments of this application, the position operator represents a description of a physical position in a natural language, to enrich an expression capability of a logical symbol, and improve accuracy of converting a natural language text into a logical language text. Further, the natural language text may be a text indicating a behavior specification. The logical language text to which the natural language text is converted can be used to efficiently detect whether a behavior of a terminal complies with the behavior specification, thereby improving detection efficiency and accuracy.

The position operator provided in embodiments of this application is first described below.

A position operator, or referred to as a distance operator, may represent an event on a path starting from a given position. For example, position operators may include one or more operators shown in Table 3, and meanings of the position operators are also shown in Table 3.

**Table 3 Position operators and meanings of the position operators**

| Operator | Meaning |
|---|---|
| Xₚᵣₑₚₒₛ | Previous position |
| Xₚₒₛ | Next position |
| Uₚᵣₑₚₒₛ | Reverse until (for position) |
| Uₚₒₛ | Until (for position) |
| Gₚᵣₑₚₒₛ | Direction always (for position) |
| Gₚₒₛ | Always (for position) |
| Fₚᵣₑₚₒₛ | Once (for position) |
| Fₚₒₛ | Finally (for position) |
| G_{pos(p1, p2)} | Always within a distance range p₁~p₂ |
| F_{pos(p1, p2)} | Existing within a distance range p₁~p₂ |

As an example of use, a position operator may represent an event at a physical position on a path. For example, Xₚᵣₑₚₒₛ(onLaneType(offRamp)) includes a proposition and a position operator, where the proposition onLaneType(offRamp) indicates whether a type of a lane in which a detected object is located is a ramp off a highway. Xₚᵣₑₚₒₛ(onLaneType(offRamp)) represents a proposition that whether a next position of the detected object is a ramp off a highway with reference to the distance operator Xₚᵣₑₚₒₛ.

As another example of use, a position operator may represent an event within a specific distance range on a path. For example, G_{pos(0, 500)} (The detected object turns on the right turn signal) represents a proposition that whether a detected object always turns on a turn signal within the distance range of (0, 500).

It should be noted that, values of a start point and an end point of the distance range may be adjusted based on an origin selected at that time. For example, (0, 500) is an example by using an investigation start point (or a start point of the distance range) as an origin. If an investigation end point is used as an origin, the distance range may also be represented by (-500, 0).

The foregoing logical operator may be in a logical language text. In this case, a description of a physical position in another language may be expressed by using one or more logical operators shown in Table 3. This significantly improves accuracy of an expression of the logical language text.

Optionally, the foregoing logical operator may be used in a plurality of scenarios, for example, used to convert a text in another language into a logical language text, and for another example, used to represent a rule of various algorithms.

As an example of use of a position operator, the position operator may be used for language conversion. In a possible implementation, the data processing apparatus may convert a natural language text into a logical language text, where the natural language text includes a description of a physical position, the logical language text includes a position operator, and the position operator represents an event at the physical position. The data processing apparatus uses the position operator in the logical language text. This improves accuracy of converting the natural language text into the logical language text.

Further, the natural language text may be a text indicating a behavior specification. The logical language text to which the natural language text is converted can be used to efficiently detect whether a behavior of a detected object complies with the behavior specification, thereby improving detection efficiency and accuracy.

With reference to accompanying drawings, a behavior detection system is described below by using an example in which a detected object is a terminal (for example, a vehicle). It should be noted that a system architecture and a service scenario described in this application are intended to describe technical solutions in this application more clearly, and do not constitute a limitation on the technical solutions provided in this application. It should be understood that, with evolution of the system architecture and emergence of a new service scenario, the technical solutions provided in this application are also applicable to similar technical problems.

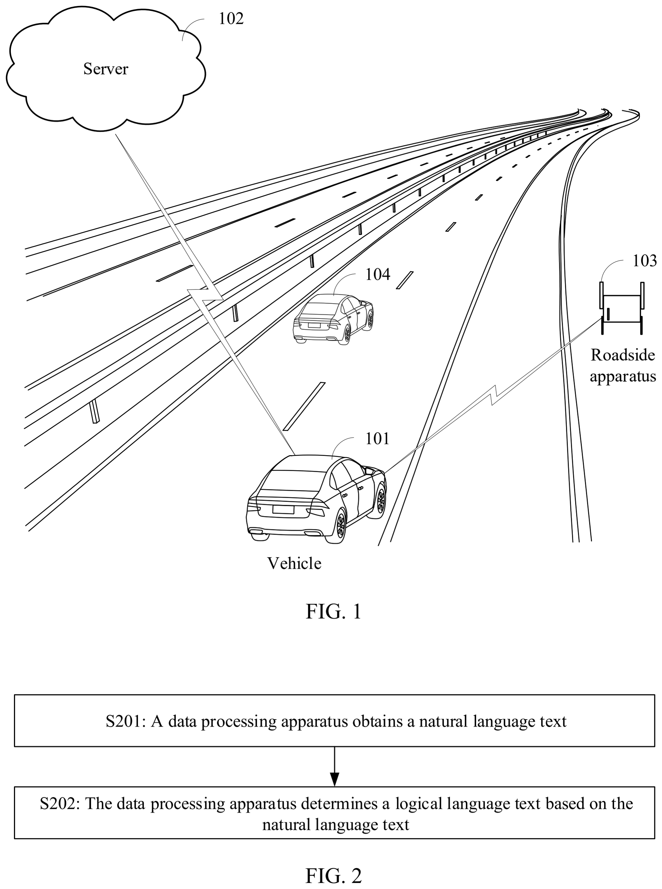

FIG. 1 is a diagram of a behavior detection system according to an embodiment of this application. The behavior detection system includes a vehicle 101. Further, the system may further include a server 102 and/or a roadside apparatus 103. The vehicle 101 has a moving capability.

For example, the vehicle 101 implements behaviors such as moving forward, turning, moving back, opening a door, turning on a vehicle signal, and stopping. It should be noted that the behavior in embodiments of this application is a behavior in a broad sense, and includes one or more of a state and a state change. For example, "A turn signal of a vehicle is in an on state" may be considered as a behavior of the vehicle; and "A speed of a vehicle is 50 kilometers per hour (km/h)" may also be considered as a behavior of the vehicle.

In an implementation, the vehicle 101 may implement the method provided in embodiments of this application. For example, the vehicle 101 may detect whether a behavior of the vehicle 101 complies with a behavior specification. For another example, the vehicle 101 may obtain a behavior of another detected object, and detect whether the behavior of the another detected object complies with a behavior specification. Refer to FIG. 1. The vehicle 101 may capture information about a front vehicle 104 via a camera, a radar, or the like, and detect whether a behavior of the vehicle 104 complies with a behavior specification.

Optionally, the server 102 is an apparatus having a centralized computing capability. Although the server 102 is referred to as a server herein, the server 102 is not limited to being implemented by a server, for example, may be replaced with a virtual machine, a container, a cloud, a data center, or the like. For example, the server includes but is not limited to a general-purpose computer, a server computer, a blade server, a rack server, and the like. When the server 102 is implemented by the server, the server 102 may include one server, or more servers (for example, a server cluster). The virtual machine is a virtualized computing module. The cloud is a software platform that uses an application virtualization technology, and can enable one or more pieces of software and applications to be developed and run in an independent virtualized environment. Optionally, the cloud may be deployed on a public cloud, a private cloud, a hybrid cloud, or the like.

The server 102 may communicate with the vehicle 101 to obtain information from the vehicle 101, and/or send information to the vehicle 101.

In a possible solution, the server 102 can be configured to implement the method provided in embodiments of this application. For example, the server 102 can obtain behavior information of the vehicle 101, and detect whether a behavior of the vehicle 101 complies with a behavior specification. Optionally, the behavior information of the vehicle 101 may be reported by a vehicle to the server 102. Herein, the behavior information may be reported by the vehicle 101, or may be reported by another vehicle, for example, reported by the vehicle 104 around the vehicle 101. Alternatively, optionally, the behavior information of the vehicle 101 may be obtained via the roadside apparatus 103. For example, a sensing device is configured on the roadside apparatus 103, and can photograph or detect a behavior of a vehicle, and report behavior information of the vehicle to the server 102.

The roadside apparatus 103 is an apparatus disposed on a road side (or an intersection, a roadside, or the like). It should be understood that the foregoing road may be an outdoor road (for example, a main road, a service road, an elevated road, or a temporary road), or may be an indoor road (for example, a road in an indoor parking lot).

The roadside apparatus 103 is configured to provide a service for the vehicle 101 and/or the server 102, and usually has one or more of the following capabilities: a communication capability, an information capture capability, a computing capability, or the like. For example, the roadside apparatus 103 may communicate with a terminal (including the vehicle 101) and the server 102. For another example, the roadside apparatus 103 includes a sensing device that can capture information around the sensing device. For example, the roadside apparatus 103 may include one or more of the following sensing devices: a camera, a radar, a lidar, a temperature sensor, a humidity sensor, a positioning apparatus, or the like. For another example, the roadside apparatus 103 provides one or more services such as identity authentication, electronic toll collection, or digital penalty points deduction for the vehicle 101.

It should be noted that the roadside apparatus 103 may be an independent device, or may be integrated into another device. For example, the roadside apparatus 103 may be integrated into a device like a smart gas station, a charging station, a smart traffic light, a street lamp, a telegraph pole, or a traffic sign.

The roadside apparatus 103 may obtain the behavior information of the vehicle 101, and/or send information to the vehicle 101.

In a possible solution, the roadside apparatus 103 can be configured to implement the method provided in embodiments of this application. For example, the roadside apparatus 103 can obtain behavior information of the vehicle 101, and detect whether a behavior of the vehicle 101 complies with a behavior specification.

When a communication connection is established between any two of the foregoing three, a link of the communication connection may include one or more types of connection media, including a wired link (for example, an optical fiber), a wireless link, a combination of a wired link and a wireless link, or the like. For example, the connection medium may be a wireless link. The wireless link uses a short-range connection technology, for example, a SparkLink (SparkLink) communication technology, an 802.11b/g technology, a Bluetooth (Bluetooth) technology, a Zigbee (Zigbee) technology, a radio frequency identification (radio frequency identification, RFID) technology, an ultra-wideband (ultra-wideband, UWB) technology, a wireless short-range communication (for example, in-vehicle short-range wireless communication) technology, or an internet of vehicles (vehicle to everything, V2X, vehicle to everything communication) technology. For another example, the wireless link uses a long-range connection technology, for example, a radio access type technology like a global system for mobile communications (global system for mobile communications, GSM), a general packet radio service (general packet radio service, GPRS), a universal mobile telecommunications system (universal mobile telecommunications system, UMTS), LTE, or 5G.

The method provided in embodiments of this application is described below with reference to the accompanying drawings. For ease of understanding, embodiments are separately described below by using a plurality of figures. This does not limit embodiments being definitely independent, that is, embodiments may be combined.

FIG. 2 is a diagram of a possible data processing method according to an embodiment of this application. Optionally, the method is applied to the foregoing system, for example, the behavior detection system shown in FIG. 1. It should be understood that, for ease of description herein, the data processing method is described in an order of S201 to S202, and is not limited to being performed in the foregoing order. An execution order, execution time, a quantity of execution times, and the like of the foregoing one or more steps are not limited in embodiments of this application. Steps S201 and S202 are specifically as follows.

Step S201: A data processing apparatus obtains a natural language text.

The data processing apparatus is an apparatus having a data processing capability. For example, the data processing apparatus may be the vehicle 101, the server 102, or the roadside apparatus 103 shown in FIG. 1. For another example, the data processing apparatus may be included in an apparatus like the vehicle 101, the server 102, or the roadside apparatus 103.

The natural language text is a text in a form of natural language, and the text herein includes but is not limited to a character string, a formula, a statement, a paragraph, a complete document, or the like.

The natural language text includes a description of a physical position. For example, "Manually push electric vehicles on sidewalks". Herein, "on sidewalks" is a description of a position. For another example, "Turn on a right turn signal at a 500 m exit sign". Herein, "at a 500 m exit sign" is also a description of a position.

In a possible implementation, the natural language text indicates a behavior specification. The behavior specification refers to a rule that the object should comply with. It may be understood that a behavior generated by an object is usually associated with a position at which the behavior is generated. Therefore, the behavior specification is often related to the description of the physical position.

Optionally, the behavior specification indicated by the natural language text may be predefined or pre-specified. In a possible implementation, the behavior specification may be predefined in an industry standard, and the industry standard is not limited herein. For another example, the behavior specification may also be pre-specified by a law or a standard, and the specific law or standard is not limited herein. For another example, the behavior specification may be a behavior rule defined by an individual or an organization. For example, the behavior specification may include a rule (for example, a traffic rule) that should be complied with by a motor vehicle, a traffic rule that should be complied with by a non-motor vehicle, a rule that should be complied with by a pedestrian, a navigation rule of an uncrewed aerial vehicle, or the like.

As an example of a behavior specification, a natural language text is "When driving off a highway, pay attention to exit warning signs and follow the following steps: at a 500 m exit warning sign, turn on a right turn signal, be prepared to enter a deceleration lane, and do not overtake." In other words, the natural language text indicates a behavior specification of a vehicle. The vehicle should turn on the right turn signal and do not overtake between the 500 m exit sign and an exit of a highway.

A manner in which the data processing apparatus obtains the natural language text may be one or a combination of the following manners: The natural language text is preconfigured in the data processing apparatus, the natural language text is predefined or pre-specified in a processing process, the natural language text is input by a user, the natural language text is obtained over a network (for example, sent by another device to the data processing apparatus), or the like.

Step S202: The data processing apparatus determines a logical language text based on the natural language text.

The logical language text includes a position operator, the position operator represents an event at the physical position, and the position operator may include one or more operators shown in Table 3. In other words, the description of the physical position in the natural language text may be represented by using a position operator. With reference to the position operator, the natural language text can be converted to the logical language text more accurately.

For example, the logical language text determined based on the natural language text "Turn on a right turn signal at a 500 m exit sign" is "G_{pos(0, 500)} (The vehicle turns on the right turn signal)". With reference to Table 3, it can be learned that G_{pos(0, 500)} represents "always within a distance range", 0 represents a start position (namely, a position of the 500-meter exit sign), and 500 represents an end position (namely, a position of the exit). Therefore, the foregoing logical language text may represent the following semantics: whether the vehicle turns on the right turn signal within a 500-meter distance from the 500-meter exit sign.

In a possible implementation, the logical language text is used to detect a detected object. For example, the logical language text may be used to detect whether the detected object complies with the behavior specification. For another example, the logical language text may be used to detect whether the detected object performs a behavior or is in a state.

For example, the proposition "G_{pos(0, 500)} (The vehicle turns on the right turn signal)" is used to detect the behavior of the vehicle. When G_{pos(0, 500)} (The vehicle turns on the right turn signal) is true, it indicates that the vehicle always turns on the right turn signal in the range of (0, 500). In other words, the vehicle complies with the behavior specification "Turn on a right turn signal at a 500 m exit sign".

In a possible implementation, the logical language text further includes a logical operator, a temporal operator, or the like. The logical operator may include the one or more operators shown in Table 1. The temporal operator may include the one or more operators shown in Table 2. Specific examples may be viewed below, and are not listed one by one herein.

In some scenarios, there are some fuzzy semantics and unclear descriptions in the natural language text, for example, keep a sufficient safe distance, and turn on a turn signal in advance.

In a possible solution, in a process of determining the logical language text, the data processing apparatus may determine a normalized text based on the natural language text, and determine the logical language text based on the normalized text. The normalized text is a statement without ambiguity and with clear semantics. For example, the sufficient safe distance is converted to a time duration of three seconds, and turn on in advance is explicitly specified as turn on three seconds in advance. The normalized text can almost directly correspond to the logical language text with a clear meaning through language conversion, thereby further improving accuracy of the expression.

The following uses an example in which the behavior specification indicated by the natural language text is a traffic rule (rule for short), to illustrate a possible process of determining the logical language text. Table 4 is a schematic table of a possible natural language text, normalized text, and logical language text according to an embodiment of this application.

**Table 4**

| | |
|---|---|
| Natural language text | When driving off a highway, pay attention to exit warning signs and follow the following steps: |
| | (c) At a 500 m exit warning sign, turn on a right turn signal; be prepared to enter a deceleration lane; and do not overtake. |
| Normalized language text | For a vehicle that is about to travel off a highway, at a 500 m exit warning sign until the vehicle travels off the highway, follow a vehicle on a deceleration lane as required, and do not overtake. |
| Logical language text | onLaneType(DecLane) ΛX onLaneTvpe(offRamp) |
| | → G_{pos(-500,0)}(~actOvertake(Ego,Obj) & onLaneType(DecLane)) |

It can be seen that the normalized rule has more specific semantics than the natural language rule. The logical language rule includes propositions and a position operator. The description of the position in the natural language text is identified by the position operator in the logical language rule.

Specifically, the proposition onLaneType(DecLane) is used to determine (or judge) whether a type of a lane in which a current vehicle is located is a deceleration lane, and the proposition onLaneType(offRamp) is used to determine whether a type of a lane in which a current vehicle is located is a ramp off a highway. A combination of onLaneType(DecLane)Λ X onLaneType(offRamp) indicates that whether a type of a lane in which a current vehicle is located is a deceleration lane and whether a type of a lane in which the vehicle is located at a next moment is a ramp off a highway, that is, indicates a state of a vehicle at a moment when the vehicle is about to travel off a ramp. The proposition actOvertake(Ego, Obj) indicates determining whether a vehicle is overtaking at a current moment. ~actOvertake(Ego, Obj) & onLaneType(DecLane) indicates determining whether a vehicle is not overtaking at a current moment, and determining whether the vehicle is on a deceleration lane.

With reference to the distance operator, G_{pos(-500, 0)}(~actOvertake(Ego, Obj) & onLaneType(DecLane)) indicates determining, at a current position within a range of 500 meters that a vehicle has traveled previously, whether the vehicle is always not overtaking, and whether the vehicle is always on a deceleration lane. When a vehicle follows the behavior specification shown in the first row of Table 4, the logical language text shown in the third row of Table 4 may represent the following proposition: When a type of a lane in which the vehicle is located is a deceleration lane and a type of a lane in which the vehicle is located at a next moment is a ramp off a highway, within a range of 500 meters that the vehicle has traveled previously, the vehicle is always not overtaking and the vehicle is always on the deceleration lane.

In a possible implementation, the deceleration lane may also be replaced with a right lane. In this case, the proposition " onLaneType(DecLane) " may also be replaced with "OnLaneType(RightMostLane)". In some scenarios, a right lane within a range of 500 meters to an exit is a deceleration lane.

In still another possible implementation, the behavior specification requires that a vehicle should travel on a deceleration lane or a right lane within a range of 500 meters to an exit. In this case, the proposition " onLaneType(DecLane) " may also be replaced with "(OnLaneType(DecLane) | OnLaneType(RightMostLane))".

In a possible implementation, the data processing apparatus may convert, by using a language processing module, the fuzzy semantics and the unclear descriptions into the statement without ambiguity and with the clear semantics. Optionally, the language processing model may be obtained through reinforcement learning, deep learning, or a convolutional neural network.

In a possible implementation, the data processing apparatus converts, by using information input by a user, the natural language text into the normalized text based on the information input by the user. For example, the data processing apparatus feeds back, to the user, a statement that cannot be specified, and receives a specific statement input by the user, where the specific statement may be obtained by the user through conversion after analysis and verification.

Optionally, the normalized language text may also be described by using a natural language. Herein, to describe the natural language text with the unclear semantics, a natural language text with clear semantics is referred to as the normalized language text. In a specific implementation process, it is also possible that there is no step of "determining the normalized text". For example, semantic clarity is implemented in the process of determining the logical language text. For another example, in some scenarios, an expression of the natural language text may be clear and unambiguous, and in this case, the natural language text does not need to be converted into the normalized language text.

In some scenarios, the behavior specification may be associated with a scenario. For example, "Turn on a right turn signal at a 500 m exit sign". Scenario information is required to indicate a position of the 500-meter exit sign. For another example, a speed-related specification is associated with a speed limit of a road. For another example, a specification on crossing a crosswalk is associated with a road where the crosswalk exists.

In a possible implementation, the logical language text may be related to specification indication information of a scenario (which is referred to as a first scenario for ease of description). The specification indication information is information related to a behavior specification in the first scenario. For example, a speed limit scenario is used as an example. A speed limit between a point A and a point B on a road in the first scenario is 50, and the specification indication information of the first scenario may include specification content (namely, a speed of the detected object needs to be less than or equal to 50), a specification application range (for example, a start point, an end point, or a distance between a start point and an end point), a specification application period (for example, all day, or a time period from a moment T1 to a moment T2). The point A, the point B, the moment T1, and the moment T2 are all example parameters, and may be randomly replaced.

In a possible implementation, the data processing apparatus determines the logical language text based on the natural language text and the specification indication information of the first scenario. In this case, the logical language text may adapt to the first scenario, and may be used for behavior detection in the first scenario, for example, detecting whether the behavior of the detected object complies with the specification. In this case, the detected object may be located in the first scenario, or the detected object is about to enter the first scenario.

Information related to the behavior specification in the first scenario may be static or dynamic.

For example, the first scenario is a road. The specification indication information of the road may be static information of the road, for example, a position of a specification sign on the road, or an application range of a specification sign. The application range of the specification sign includes a distance range (or referred to as an application distance range) and a time range (or referred to as an application period), and the like.

In a possible implementation, the specification indication information of the first scenario may be obtained from a map of the first scenario. For example, the first scenario may be a road, and a high-definition map and/or a digital road network include/includes static information of the road, for example, a position of a traffic rule sign board of the road, and an application range of the sign board.

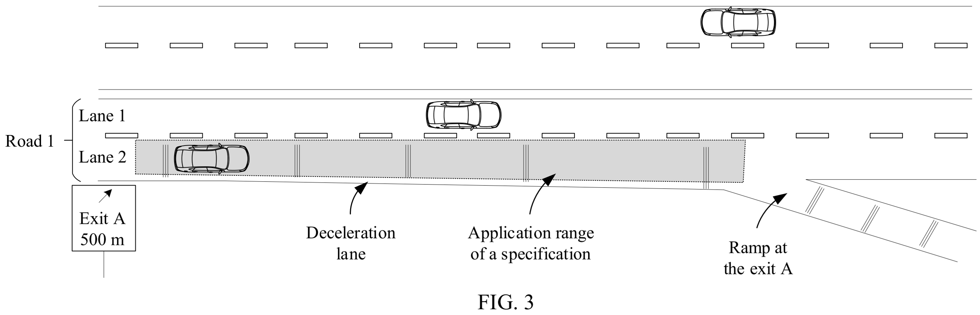

A digital road network is used as an example below to describe a possible type of specification indication information. FIG. 3 is a diagram of a road according to an embodiment of this application. For ease of description, the road is represented by a road 1 below, and the road 1 includes two lanes: a lane 1 and a lane 2. In a digital road network, specification indication information of the road 1 may include information shown in Table 5.

**Table 5**

| | |
|---|---|
| Digital road network (example) | Road 1: |
| | Lane 1: Speed range (60, 120), ... |
| | Lane 2: Sign board of 1 km to an exit (application period: all day; application distance range: (495, 1498)), sign board of 500 m to an exit (application period: all day; application distance range: (1498, 1998)), ... |

With reference to FIG. 3 and Table 5, it can be learned that a speed limit of the lane 1 (Lane 1) is from 60 kilometers per hour (km/h) to 120 km/h. The Lane 2 (Lane 2) has two sign boards. The application period of the "sign board of 1 km to an exit" is all (all) day. The application distance range is road coordinates (s=495 as a start point and s=1498 as an end point). The application period of the "sign board of 500 m to an exit" is all (all) day. The application distance range is road coordinates (s=1498 as a start point and s=1998 as an end point).

In a possible implementation, the data processing apparatus obtains the logical language text by using the natural language text and the specification indication information, thereby improving flexibility of conversion of the logical language text. When the information in the scenario changes, a parameter in the logical language text may also be correspondingly updated.

As an example of obtaining the logical language text based on the specification indication information, the specification indication information of the first scenario includes an application distance range of a behavior specification in the first scenario. The position operator in the logical language text includes a position parameter, and the position parameter is determined based on the application distance range.

A speed limit scenario is used as an example. A speed limit on the lane 1 of the road 1 is 60 km/h to 120 km/h, and the position parameter in the position operator may be determined by using a distance range of the speed limit on the lane 1. For example, if the distance range of the speed limit on the road 1 is 800 meters, a logical statement about the speed limit specification may be represented by "G_{pos(p1, p2)}(The vehicle is within the speed limit range (v1, v2))", where p1 and p2 may be determined by using the distance range of the speed limit on the lane 1. For example, if an end point of the distance range of the speed limit is used as an origin, p1=-800, and p2=0. For another example, if a start point of the distance range of the speed limit is used as an origin, p1=0, and p2=800.

As an example of obtaining the logical language text based on the specification indication information, a parameter of a proposition in the logical language specification may also be determined based on the specification indication information. For example, v1 and v2 in the foregoing logical statement may be determined based on the range of the speed limit on the road 1 in the digital road network, for example, v1=60 and v3=120.

The foregoing logical statement may be used to detect whether a vehicle on the road 1 is overspeed. Therefore, with reference to specification indication information in a scenario, a logical language text applicable to the scenario can be more flexibly and accurately determined, to detect whether a detected object in the scenario complies with a specification.

In some scenarios, in a process of determining a position parameter in a logical language text by using specification indication information, a margin may be set. In other words, a specification indicated by a logical language text is looser than a specification indicated by specification indication information. For example, the data processing apparatus may set looseness in a distance range, so that a behavior detection process is more appropriate, thereby improving user experience. In some scenarios, a margin may further compensate for violation caused by inaccurate positions of some sign boards, thereby improving user experience of the terminal.

As another example of obtaining the logical language text based on the specification indication information, one type of specification indication information is, for example, "Highway 500-meter exit sign board: {position: d1}, {application range: (d1, d2)}". In this case, "Turn on a right turn signal at a 500 m exit warning sign" may be represented by "G_{pos(p1, p2)}(The vehicle turns on the right turn signal)", where values of p1 and p2 may be determined by using d1 and d2. For example, a distance difference between p2 and p1 is equal to a distance difference between d2 and d1, that is, p2-p1=d2-d1. For example, when d1=1498 and d2=1998, for example, p2 is an origin, in this case, p1=-500, and p2=0; or for example, p1 is an origin, in this case, p1=0, and p2=500.

In some scenarios, when the position parameter is determined by using d1 and d2, a margin may be set. For example, when d1=1498 and d2=1998, a distance difference between d2 and d1 is 500. For example, if an origin p2 is an origin, p2 is 0, and p1 may be -550 (an additional distance margin of 50 m is considered).

The following uses an example in which the specification is a traffic rule (rule for short) to illustrate a conversion process with reference to the specification indication information. Table 6 is a schematic table of a possible natural language text, normalized text, and logical language text according to an embodiment of this application.

**Table 6**

| | |
|---|---|
| Natural language rule | When driving off a highway, pay attention to exit warning signs and follow the following steps: |
| | (b) At a 1 km exit warning sign, follow a vehicle on a right lane, and do not overtake. |
| | (c) At a 500 m exit warning sign, turn on a right turn signal, be prepared to enter a deceleration lane, and do not overtake. |
| Normalized language rule | For a vehicle that is about to travel off a highway, at 1 km or 500 m exit warning sign, follow a vehicle on a right lane as required, and do not overtake. |
| Logical language rule | onLaneType(DecLane) & X onLaneType(offRamp)& |
| | (G_{pos(*p*1, *p*2)}underTrafficSign(Ego, OffRamp)) |
| | → G_{pos(*p*1, *p*2})(~actOvertake(*Ego*, Obj) & onLaneType(DecLane)) |
| Parameter configuration | *p*1=-1100 (a distance margin of 100 m is considered), and p2=0, where a position at a current moment is a distance to an origin. |

In the logical language rule shown in Table 6, values of p1 and p2 in the logical language rule may be configured with reference to the digital road network. In this case, logical language rules applicable to different roads may be generated based on static information of the different roads, to detect behavior of the detected object on the different roads.

In Table 6, the proposition underTrafficSign (Ego, OffRamp) represents whether a vehicle (Ego represents an ego vehicle) is within an application range of an off ramp sign plate (OffRamp represents an off ramp sign). Further, a behavior detection apparatus (described below) determines, based on the digital road network and a current position of the vehicle, whether the vehicle is in an application range of an off ramp sign plate. In the foregoing example, with reference to the position operator, the natural language rule in the first row of Table 6 is finally represented by using a logical language. The logical language rule shown in the third row of Table 6 may be used to detect a behavior of the vehicle. Specific detection content may be as follows: When the vehicle is about to be off a ramp, whether the vehicle never overtakes and is traveling on a deceleration lane within the distance range from p1 to p2 is checked.

The distance range is mentioned above a plurality of times. The distance range is described below.

In a possible example, the distance range is a distance along a path. For example, the path is a road, and the distance range may include a start point and an end point in a road coordinate system. The road coordinate system may be understood as a standard route of the road. A positive direction of the road coordinate system is a normal traveling direction along the road.

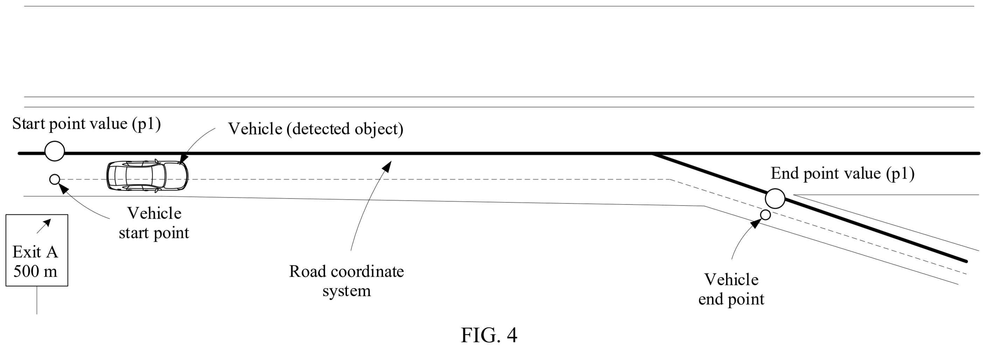

FIG. 4 is a diagram of another road according to an embodiment of this application. The road includes a plurality of lanes, and a road coordinate system is shown by an arrow in FIG. 4. A normal traveling direction is a positive direction of the road.

In a possible implementation, when the behavior of the vehicle is detected, a traveling route of the vehicle may deviate from the road coordinate system. During detection, the traveling route of the vehicle or some points in the traveling route may be projected to the road coordinate system, to detect the behavior of the vehicle in a normalized manner.

In a possible implementation, if a position operator represents a description of the road, when the position operator includes a position parameter, the position parameter may also be determined based on the road coordinate system of the road.

For example, a logical language text is used to detect a behavior of a detected object within a first distance range on a first road. With reference to FIG. 4, the logical language text is used to detect a behavior of a vehicle between a vehicle start point and a vehicle end point. In other words, the first distance range may be a distance between the vehicle start point and the vehicle end point.

A position operator in the logical language text includes a first value (namely, p1) and a second value (namely, p2), the first value is a distance between the vehicle start point and an origin in the normal traveling direction of the first road, and the second value is a distance between the vehicle end point and the origin in the normal traveling direction of the first road.

Optionally, the first value and the second value may be calculated by projection to the road coordinate system. In other words, a difference between p1 and p1 is not equal to an actual traveling distance of the vehicle, but is equal to a distance of a projection of a traveling route of the vehicle onto the road coordinate system.

The origin may be predefined. For example, the origin is the vehicle end point. The second value is 0 (p2=0), and the first value is a distance of projections of the vehicle start point and the vehicle end point onto the road coordinate system, namely, -500 (the start point is in a negative direction of the end point).

Optionally, the origin is a current position of the detected object or a position of a projection of a current position of the detected object onto the road coordinate system. Alternatively, optionally, the origin may be an application start point of a behavior specification, for example, an application start point and an application end point of a sign board. Alternatively, the origin may be a position of a sign board.

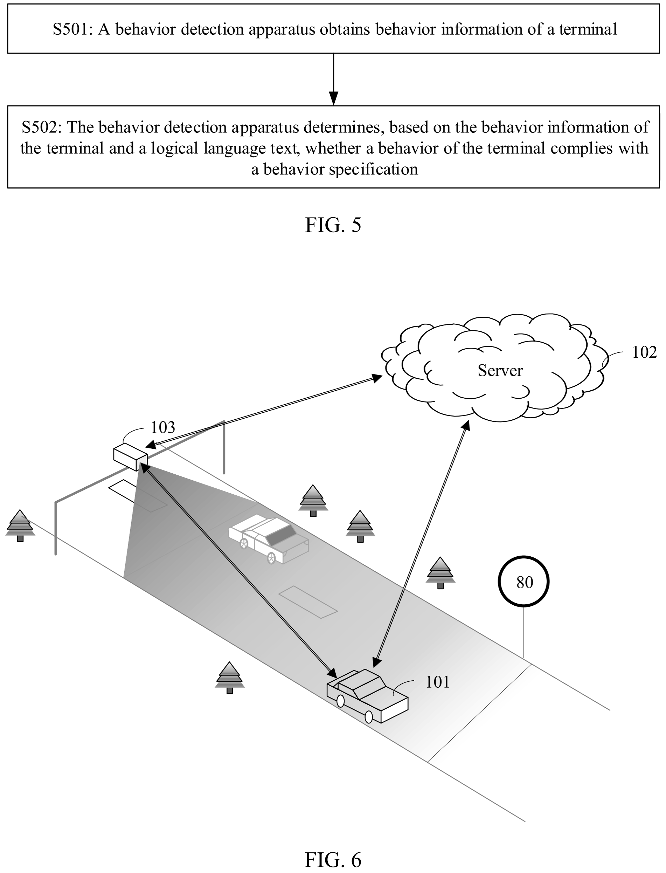

FIG. 5 is a diagram of a possible behavior detection method according to an embodiment of this application. Optionally, the method is applied to the foregoing system, for example, the behavior detection system shown in FIG. 1. It should be understood that, for ease of description herein, the behavior detection method is described in an order of S501 to S502, and is not limited to being performed in the foregoing order. An execution order, execution time, a quantity of execution times, and the like of the foregoing one or more steps are not limited in embodiments of this application. Steps S501 and S502 are specifically as follows.

Step S501: A behavior detection apparatus obtains behavior information of a terminal.

The behavior detection apparatus is an apparatus having a computing capability. Optionally, the behavior detection apparatus is an independent device, for example, a terminal (for example, the vehicle 101 shown in FIG. 1), a server, or a roadside apparatus. Alternatively, the behavior detection apparatus may be a module in an independent device, for example, a processor or a controller in a terminal.

The behavior information is information describing a behavior, and may be understood as a scenario or a context of the behavior. The behavior information includes but is not limited to a behavior name, a behavior type, and a behavior scenario (for example, time, a position, a region, or terrain of the behavior). The behavior information may be formatted data, or may be non-formatted data, for example, video data, image data, or traveling parameter data of the terminal (for example, information such as a speed, a lane, and a route).

A manner in which the behavior detection apparatus obtains the behavior information of the terminal may be that the behavior detection apparatus captures the behavior information of the terminal, or may receive the behavior information sent by another device, or the behavior information of the terminal may be input by a user. Several possible examples are listed below.

Case 1: The behavior detection apparatus is the terminal or is included in the terminal, and can capture the behavior information of the terminal.

For example, the terminal includes a positioning apparatus (or a map) that can be configured to detect a position and a current speed of the terminal. The position information and the speed may be used as the behavior information of the terminal.

For another example, the terminal may include a vision sensor (like a camera, a radar, or a lidar). The vision sensor captures an image or a point cloud, and the image or the point cloud may be used to determine a behavior of the terminal. In other words, data captured by the vision sensor may be used as the behavior information.

Case 2: The behavior detection apparatus is located outside the terminal, and can capture the behavior information of the terminal.

FIG. 6 is a diagram of a running scenario of the behavior detection method according to this embodiment of this application. The behavior detection apparatus may be a roadside apparatus 103, or may be included in a roadside apparatus 103. The roadside apparatus 103 includes a sensor, and the sensor may record a behavior of the terminal. Data captured by the sensor may be used as the behavior information. The sensor herein includes but is not limited to a speed measurement sensor, a camera, a radar, a lidar, or the like.

For example, the roadside apparatus 103 may obtain a picture of a vehicle 101, and the picture may be used as the behavior information of the vehicle 101. For another example, the roadside apparatus may photograph a video, and the video may be used as the behavior information of the vehicle 101. For another example, the roadside apparatus may generate point cloud data, and the point cloud data may be used as the behavior information or the like.

Case 3: The behavior information of the terminal is provided by the terminal or another device for the behavior detection apparatus.

FIG. 6 is used as an example. The behavior detection apparatus may be a server 102 or included in a server 102. The behavior information of the terminal may be provided by a roadside apparatus 103 for the server 102. Alternatively, the behavior information of the terminal may be provided by the terminal (for example, the vehicle 101) for the server 102. Alternatively, the behavior information of the terminal may be provided by another terminal, for example, another vehicle around the vehicle 101, for the server 102.

The foregoing cases are example cases made for ease of understanding the concept of "obtaining". In a specific implementation process, the behavior detection apparatus may further obtain the behavior information of the terminal in another manner. In still another possible implementation, a user copies the behavior information of the terminal to the behavior detection apparatus through a readable storage medium. In still another possible implementation, the behavior information of the terminal may alternatively be input by a user or uploaded by a user. For example, the user photographs the behavior information of the terminal by using a mobile phone, a driving recorder, or the like, and uploads, through a user interface, the behavior information of the terminal to the behavior detection apparatus.

Step S502: The behavior detection apparatus determines, based on the behavior information of the terminal and a logical language text, whether a behavior of the terminal complies with a behavior specification.

The logical language text includes a position operator, and the position operator represents an event at a physical position.

For example, the logical language text may indicate the behavior specification. For example, a specification "Speed limit 80 on a road L2" is represented by G_{pos(*p*1, *p*2)} WithinSpeedLimit(Ego, 0, 80) by using a logical language text. The proposition WithinSpeedLimit(Ego, 0, 80) represents whether a speed of a vehicle is within a speed limit range of 80 km/h (0 represents a lowest speed, and 80 represents a highest speed). p1 is a start point value of a speed limit range on a road 2, and p2 is an end point value of the speed limit range on the road 2.

The behavior detection apparatus determines, based on the behavior information of the terminal, whether the logical language text is true or false, and if the logical language is true, determines that the terminal complies with the behavior specification; or if the logical language is false, determines that the terminal does not comply with the behavior specification. For example, G_{pos(*p*1, *p*2)} WithinSpeedLimit(Ego, 0, 80) is used to detect the behavior of the vehicle. If a logical value of the logical language text is true, it indicates that the terminal is not overspeed on L2. Otherwise, if a logical value of the logical language text is false, it indicates that the terminal is overspeed on L2.

In a possible design, a form of the logical language text is: conditional proposition → behavioral proposition, and → represents derivation. The behavior detection apparatus determines a logical value of the conditional proposition and a logical value of the behavioral proposition based on the behavior information of the terminal; and if the conditional proposition is true and the logical value of the behavioral proposition is true, determines that the behavior of the terminal complies with the behavior specification; or if the conditional proposition is true and the logical value of the behavioral proposition is false, determines that the behavior of the terminal does not comply with the behavior specification. For example, the logical language text is, for example, onLaneType(DecLane) ΛX onLaneType(offRamp) → G_{pos(-500, 0)}(~actOvertake(Ego, Obj) & onLaneType(DecLane)) , where the conditional proposition is "onLaneType(DecLane)ΛX onLaneType(offRamp)", and the behavioral proposition is "G_{pos(-500, 0)}(~actOvertake(Ego, Obj) & onLaneType(DecLane))". When the two propositions are true, it is determined that the behavior of the terminal complies with the behavior specification.

In a possible implementation, the logical language text indicates a behavior specification in a first scenario. In this case, the behavior detection apparatus may determine, based on the behavior information of the terminal and the logical language text, whether a behavior of the terminal in the first scenario complies with the behavior specification in the first scenario.

Optionally, the logical language text may be obtained based on the specification indication information. For related descriptions, refer to the descriptions in the embodiment shown in FIG. 2.

After behavior detection, the behavior detection apparatus may output a behavior detection result. The behavior detection result may indicate whether the behavior of the terminal complies with the behavior specification. Further, the behavior detection result may further include a behavior that does not comply with the behavior specification (violation for short), a number of the terminal, occurrence time of the violation, a road section on which the violation occurs, a violation degree of the violation, a punishment measure (like deduction and fine) of the violation, and the like.

For example, a behavior detection result may be shown in Table 7, and includes a sequence number of a behavior, a number of a terminal generating the behavior, generation time, a road section on which the behavior generates, a corresponding punishment measure, and the like. The behavior detection result may indicate a specific case in which the terminal does not comply with the behavior specification at a highway A, reflect a degree to which the behavior of the terminal is restricted by the specification, and help remind a controller of the terminal to enhance operation normalization.

**Table 7**

| Sequence number of a behavior | Number of a terminal | Behavior | Time | Road section | Punishment measure |
|---|---|---|---|---|---|
| ... | ... | ... | ... | ... | ... |
| H1 | T1 | Overspeed | 2023/1/1 | Highway A | Deduct x points and impose a fine of y yuan |
| H2 | T2 | Overspeed | 2023/1/1 | Highway A | Deduct x points and impose a fine of y yuan |
| H3 | T2 | Overspeed | 2023/1/1 | Highway A | Deduct x points and impose a fine of y yuan |
| H3 | T2 | Violation of lane change | 2023/1/1 | Highway A | Deduct z points and impose a fine of k yuan |
| ... | ... | ... | ... | ... | ... |

It should be understood that the sequence number of the behavior, the number of the terminal, the name of the road section, the punishment measure, and the like shown in Table 7 are merely examples. For example, amounts represented by x, y, z, and k may be designed based on a specific situation.

In a possible design, in test scenarios such as a road test or a closed road test of the terminal, the behavior detection apparatus may detect the terminal based on the behavior specification. The behavior detection result may be used to analyze intelligence and safety of the terminal, thereby facilitating quality upgrade of the terminal. For example, a terminal equipped with an intelligent driving system or having an intelligent driving function (collectively referred to as an intelligent driving terminal) automatically detects a behavior by using a logical language text. If the terminal is always overspeed on a road section, a speed control problem exists in a traveling process of the terminal on the road section. Further, the behavior detection apparatus may feed back, update, or the like an intelligent driving function for which the driving operation is performed.

In some possible designs, the behavior detection apparatus further obtains violation alert information. Further, the violation alert information may be provided to the terminal (for example, sent to a vehicle or a mobile phone of a vehicle owner), a management platform of the terminal (for example, a vehicle management center, and for another example, an autonomous driving server), and the like.

The violation alert information indicates information about the behavior specification that is violated and/or indicates how to comply with the behavior specification. In other words, the violation alert information may include information about the behavior specification that is violated by the terminal, the violation alert information may indicate the terminal (or a user of the terminal) to comply with the behavior specification, or the like.

The information about the behavior specification that is violated by the terminal includes, for example, the behavior specification that is violated, time, a place, and a picture of violation, and a punishment (a punishment on a controller of the terminal) for the violation.

In a possible example, the behavior detection apparatus detects that a terminal T2 has violation of lane change at a highway A, and the behavior detection apparatus may send violation information to the terminal T2, where the violation information includes, for example, a law for determining the violation of lane change, violation (for example, the violation of lane change), a violation place (for example, the highway A), deduction (for example, deduct z points), and a fine (for example, indicating that a user needs to pay a fine of k yuan).

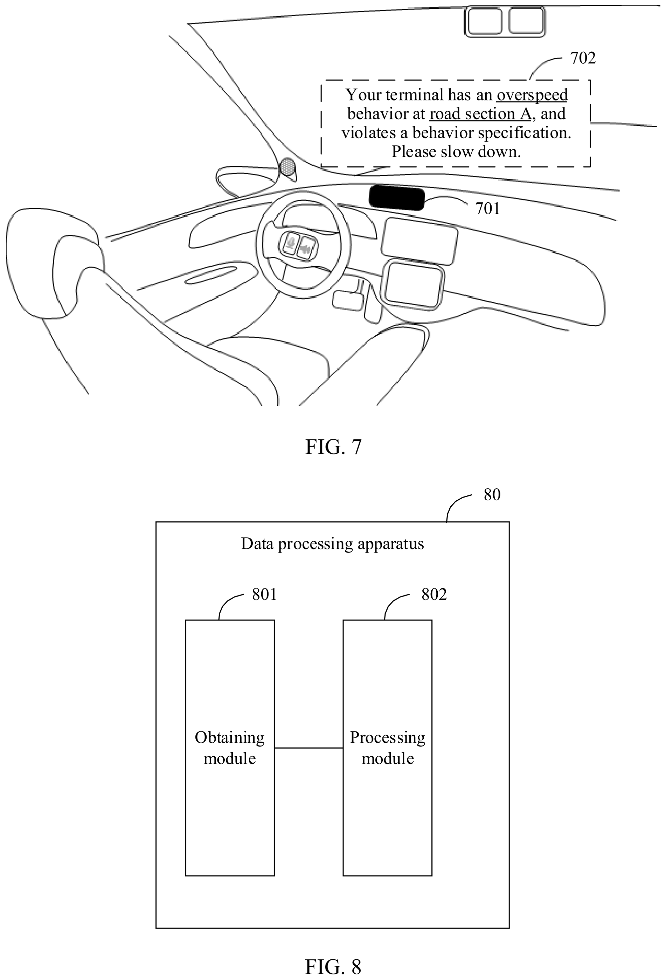

In another possible example, when the terminal has a corresponding hardware condition, the terminal may trigger a voice prompt, an optical prompt, an electrical prompt, a vibration prompt, a display, or the like, to output the violation alert information. For example, the terminal may include a module for controlling an output, like a display processor, an audio processor, or a vibration processor (or the terminal is connected to a module for controlling an output), and the terminal may output a reminder signal to a user by using the foregoing module. A display processor is used as an example. FIG. 7 is a diagram of a standard behavior reminder according to an embodiment of this application. The display processor 701 may be configured to output violation alert information and the like. As shown in an area 702, the violation alert information includes violation (namely, "overspeed"), a violation place (namely, "road section A"), and information indicating a user to comply with behavior specification (namely, "slow down").

In still another possible example, the behavior of the vehicle may be performed by an intelligent driving system or an intelligent driving function. When the terminal is controlled by the intelligent driving function, if it is detected that violation exists in the terminal, violation alert information may be output to the intelligent driving system, so that the intelligent driving function can update a driving decision, thereby reducing duration of the violation.

In some possible implementations, a control switching indication is sent if violation of the terminal is made by an intelligent driving function, where the control switching indication is used to deactivate the intelligent driving function.

For example, an adaptive cruise control system of a vehicle may accelerate or decelerate the vehicle, or perform another operation. If the adaptive cruise control system is activated, the vehicle is overspeed. In this case, a server or an intelligent driving controller of the vehicle may deactivate adaptive cruise or temporarily lock the adaptive cruise control system, and a driver takes over the vehicle.

In a possible solution, the behavior information of the terminal further includes information about the intelligent driving function related to the behavior of the terminal. Function feedback information is output when the behavior of the terminal does not comply with the behavior specification, where the function feedback information indicates the intelligent driving function and the behavior specification that is violated by the terminal, and the function feedback information is used to update the intelligent driving function.

In the embodiment shown in FIG. 5, the logical language text includes the position operator, and the position operator may represent the event at the physical position. This not only reduces complexity of the proposition in the logical language text, but also improves semantic accuracy, and can improve detection efficiency and detection accuracy.

Some apparatuses for implementing the foregoing methods are described below.

It should be understood that, in the apparatus provided in embodiments of this application, division into the units is merely logical function division. In actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores an instruction. The processor invokes the instruction stored in the memory, to implement any one of the foregoing methods or implement functions of each unit of the apparatus. The processor is, for example, a general-purpose processor, like a central processing unit (Central Processing Unit, CPU) or a microprocessor. The memory is a memory inside the apparatus or a memory outside the apparatus. Alternatively, the units in the apparatus may be implemented in a form of hardware circuits, and functions of some or all units may be implemented by designing hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All units of the foregoing apparatus may be implemented in a form of software invoked by the processor, or all units may be implemented in a form of the hardware circuit, or some units may be implemented in a form of software invoked by the processor, and the remaining part may be implemented in a form of the hardware circuit.

It can be learned that each unit of the foregoing apparatus may be one or more processors (or processing circuits) configured to implement the foregoing method, for example, a CPU, a GPU, an NPU, a TPU, a DPU, a microprocessor, an ASIC, an FPGA, or a combination of at least two of these processor forms.

In addition, all or some of the units of the foregoing apparatus may be integrated together, or may be implemented independently. In an implementation, these units are integrated together and implemented in a form of a system-on-a-chip (system-on-a-chip, SoC). The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

Several possible apparatuses are listed below.

FIG. 8 is a diagram of a structure of a data processing apparatus according to an embodiment of this application. The data processing apparatus 80 includes an obtaining module 801 and a processing module 802. The obtaining module 801 may be configured to implement the foregoing functions such as obtaining and receiving. In some possible implementation scenarios, the obtaining module 801 may alternatively be replaced with a communication interface module and/or a transceiver module. The processing module 802 may be configured to implement operations such as determining, computation, generation, and conversion, and/or configured to support another process in the foregoing embodiment.

For example, the data processing apparatus 80 is configured to implement the foregoing data processing method, for example, the data processing method in the embodiment shown in FIG. 2.

In a possible implementation, the obtaining module 801 is configured to obtain a natural language text, where the natural language text includes a description of a physical position.

The processing module 802 is configured to determine, based on the natural language text, a logical language text for detecting a detected object, where the logical language text includes an atomic proposition and a position operator, and the position operator represents an event at the physical position.

Optionally, the logical language text may further include a proposition. The proposition herein may be an atomic proposition, or may be a compound proposition. Certainly, the compound proposition also includes an atomic proposition.

Optionally, the logical language text may be a character string, an instruction, a statement, a text paragraph, computer program code, a document, or the like expressed in a form of logical language. A storage and transmission format of the text is not strictly limited in this application.

In a possible implementation, the natural language text indicates a behavior specification.

In still another possible implementation, the logical language text is used to determine whether the detected object complies with the behavior specification.

Determining, based on the natural language text, the logical language text for detecting the detected object includes:
determining a normalized text based on the natural language text; and
determining, based on the normalized text, the logical language text for detecting the detected object.

In still another possible implementation, the position operator includes at least one of the following operators:
previous position Xₚᵣₑₚₒₛ, next position Xₚₒₛ, until Uₚᵣₑₚₒₛ, reverse until Uₚₒₛ, direction always Gₚᵣₑₚₒₛ, always Gₚₒₛ, once Fₚᵣₑₚₒₛ, finally Fₚₒₛ, always G_{pos(p1, p2)} within a distance range from a first value p₁ to a second value p₂, and existing F_{pos(p1, p2)} within a distance range from a first value p₁ to a second value p₂, where the first value and the second value are position parameters.

In still another possible implementation, the processing module 802 is configured to:
determine the logical language text based on the natural language text and specification indication information of a first scenario, where the logical language text is used to detect a behavior of the detected object in the first scenario.

Optionally, the specification indication information in the first scenario may be obtained from a map of the first scenario. For example, the first scenario may be a road, and a high-definition map and/or a digital road network include/includes static information of the road, for example, a position of a traffic rule sign board of the road, and an application range of the sign board.

In still another possible implementation, the detected object may be located in the first scenario. Alternatively, the detected object is about to enter the first scenario.

In still another possible implementation, the specification indication information of the first scenario includes an application distance range of the behavior specification in the first scenario, the position operator includes a position parameter, and the position parameter is determined based on the application distance range.

In still another possible implementation, the logical language text is used to detect a behavior of the detected object within a first distance range on a first road;
the first distance range includes a start point and an end point in a road coordinate system of the first road, a positive direction of the road coordinate system represents a normal traveling direction along the first road, and the road coordinate system includes an origin; and
the position operator includes a first value and a second value, the first value is a distance between the start point and the origin in the normal traveling direction of the first road, and the second value is a distance between the end point and the origin in the normal traveling direction of the first road.

In still another possible implementation, the origin is a current position of the detected object or a position of a projection of a current position of the detected object onto the road coordinate system.

Optionally, the origin may be an application start point of the behavior specification, for example, an application start point and an application end point of a sign board. Alternatively, the origin may be a position of a sign board.

In still another possible implementation, the logical language text further includes a logical operator. The logical operator may include one or more of negation, conjunction, disjunction, derivation, equivalence, or the like.

In still another possible implementation, the logical language text further includes a temporal operator. The temporal operator may include next X, until U, globally G, finally F, always happen G_{(t1, t2)} within t₁~t₂, and happen F_{(t1, t2)} within t₁~t₂.

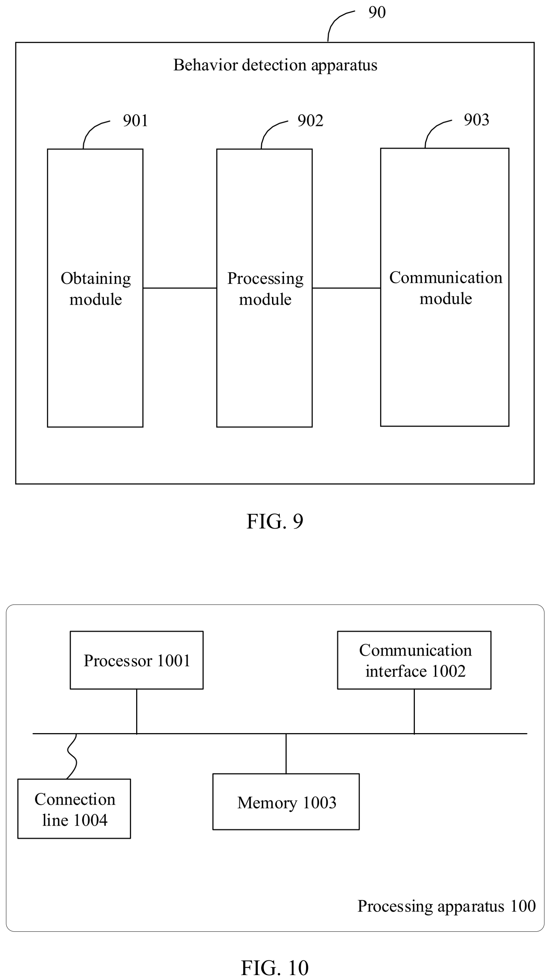

FIG. 9 is a diagram of a structure of a behavior detection apparatus according to an embodiment of this application. The behavior detection apparatus 90 includes an obtaining module 901 and a processing module 902. Optionally, a communication module 903 is further included. The obtaining module 901 may be configured to implement the foregoing operations such as obtaining, receiving, and reading. The communication module 903 implements a communication function, for example, receiving and sending information.

In some possible implementation scenarios, the obtaining module 901 and the communication module 903 may alternatively be one unit. Optionally, both may be replaced by a communication interface module and/or a transceiver module. The processing module 902 may be configured to implement functions such as determining, conversion, detection, or projection, and/or configured to support another process in the foregoing embodiment.

For example, the behavior detection apparatus 90 is configured to implement the foregoing behavior detection method, for example, the data processing method in the embodiment shown in FIG. 6.

In still another possible implementation, the obtaining module 901 is configured to obtain behavior information of a terminal.

The processing module 902 is configured to determine, based on the behavior information of the terminal and a logical language text, whether a behavior of the terminal complies with a behavior specification, where the logical language text includes a position operator, and the position operator represents an event at a physical position.

Optionally, because a behavior is usually associated with a physical position at which the behavior is performed, the behavior information may include information indicating the position of the behavior.

In a possible implementation, the position operator includes at least one of the following operators:
previous position Xₚᵣₑₚₒₛ, next position Xₚₒₛ, until Uₚᵣₑₚₒₛ, reverse until Uₚₒₛ, direction always Gₚᵣₑₚₒₛ, always Gₚₒₛ, once Fₚᵣₑₚₒₛ, finally Fₚₒₛ, always G_{pos(p1, p2)} within a distance range from a first position to a second position, and existing F_{pos(p1, p2)} within a distance range from a first position to a second position, where the first value and the second value are position parameters.

In still another possible implementation, the behavior detection apparatus further includes the communication module 903. The communication module 903 is configured to send and/or receive information, and/or is configured to output and/or input information.

In still another possible implementation, the communication module 903 is configured to send violation alert information, where the violation alert information indicates information about the behavior specification that is violated and/or indicates how to comply with the behavior specification. In other words, the violation alert information may include information about the behavior specification that is violated by the terminal, the violation alert information may indicate the terminal (or a user of the terminal) to comply with the behavior specification, or the like.

In still another possible implementation, the communication module 903 is configured to send a control switching indication, where the control switching indication is used to deactivate an intelligent driving function.

Optionally, the communication module 903 sends the control switching indication when the behavior of the terminal does not comply with the behavior specification, or may not send the control switching indication if a behavior specification of the terminal does not violate the specification.

In still another possible implementation, the communication module 903 is configured to output a behavior detection result, where the behavior detection result indicates whether the behavior of the terminal complies with the behavior specification.

In still another possible implementation, the behavior information of the terminal further includes information about the intelligent driving function related to the behavior of the terminal, and the communication module 903 is configured to:
output function feedback information when the behavior of the terminal does not comply with the behavior specification, where the function feedback information indicates the intelligent driving function and the behavior specification that is violated by the terminal, and the function feedback information is used to update the intelligent driving function.

In still another possible implementation, a form of the logical language text is: conditional proposition → behavioral proposition, and → represents derivation; and
the processing module 902 is configured to:
determine a logical value of the conditional proposition and a logical value of the behavioral proposition based on the behavior information of the terminal; and
if the conditional proposition is true and the logical value of the behavioral proposition is true, determine that the behavior of the terminal complies with the behavior specification; or
if the conditional proposition is true and the logical value of the behavioral proposition is false, determine that the behavior of the terminal does not comply with the behavior specification.

In still another possible implementation, the logical language text indicates a behavior specification in a first scenario; and the processing module 902 is configured to:
determine, based on the behavior information of the terminal and the logical language text, whether a behavior of the terminal in the first scenario complies with the behavior specification in the first scenario.

In another possible implementation, the processing module 902 is further configured to:
determine the logical language text based on a natural language text and specification indication information of the first scenario, where the natural language text is a behavior specification described in a natural language.

In still another possible implementation, the specification indication information of the first scenario includes an application distance range of the behavior specification in the first scenario, the position operator includes a position parameter, and the position parameter is determined based on the application distance range.

In still another possible implementation, the logical language text is used to detect a behavior of the detected object within a first distance range on a first road;
the first distance range includes a start point and an end point in a road coordinate system of the first road, a positive direction of the road coordinate system represents a normal traveling direction along the first road, and the road coordinate system includes an origin; and
the position operator includes a first value and a second value, the first value is a distance between the start point and the origin in the normal traveling direction of the first road, and the second value is a distance between the end point and the origin in the normal traveling direction of the first road.

In still another possible implementation, the origin is a current position of the detected object or a position of a projection of a current position of the detected object onto the road coordinate system.

Optionally, the origin may be an application start point of the behavior specification, for example, an application start point and an application end point of a sign board. Alternatively, the origin may be a position of a sign board.

In still another possible implementation, the logical language text further includes a logical operator. The logical operator may include one or more of negation, conjunction, disjunction, derivation, equivalence, or the like.

In still another possible implementation, the logical language text further includes a temporal operator. The temporal operator may include next X, until U, globally G, finally F, always happen G_{(t1, t2)} within t₁~t₂, and happen F_{(t1, t2)} within t₁~t₂.

FIG. 10 is a diagram of a structure of a processing apparatus according to an embodiment of this application. The processing apparatus 100 may include at least one processor 1001 and a communication interface 1002. Optionally, at least one memory 1003 may be included. Further, optionally, the processing apparatus may further include a connection line 1004. The processor 1001, the communication interface 1002, and/or the memory 1003 are connected through the connection line 1004 and communicate with each other through the connection line 1004, to transfer a control signal and/or a data signal. Optionally, the processing apparatus 100 may be an independent device, like a terminal, a server, or a roadside apparatus, or may be a component included in an independent device, like a chip, a software module, or an integrated circuit.
(1) The processor 1001 is a module that performs an operation. In an implementation, the processor may be a circuit having an instruction reading and running capability, for example, a central processing unit (Central Processing Unit, CPU), a microprocessor, a graphics processing unit, a central processing unit (Central Processing Unit, CPU), a microprocessor, or a graphics processing unit (graphics processing unit, GPU) (which may be understood as a microprocessor). In another implementation, the processor may implement a specific function by using a logical relationship of a hardware circuit, and the logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), like an FPGA. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).
(2) The communication interface 1002 may be configured to provide an information input or output for the at least one processor. In some possible scenarios, the communication interface 1002 may include an interface circuit, and/or the communication interface 1002 may be configured to receive data sent from the outside and/or send data to the outside. For example, the communication interface 1002 may be a wired link interface including an Ethernet cable and the like, or may be a wireless link (Wi-Fi, Bluetooth, universal wireless transmission, an in-vehicle short-range communication technology, another short-range wireless communication technology, or the like) interface. Optionally, the communication interface 1002 may further include a transmitter (for example, a radio frequency transmitter or an antenna), a receiver, or the like that is coupled to the interface.

Optionally, if the processing apparatus 100 is an independent device, the communication interface 1002 may include a receiver and a transmitter. The receiver and the transmitter may be a same component or different components. When the receiver and the transmitter are a same component, the component may be referred to as a transceiver.

Optionally, if the processing apparatus 100 is a chip or a circuit, the communication interface 1002 may include an input interface and an output interface, and the input interface and the output interface may be a same interface or different interfaces.

Optionally, a function of the communication interface 1002 may be implemented through a transceiver circuit or a dedicated transceiver chip. The processor 1001 may be implemented by using a dedicated processing chip, a processing circuit, a processor, or a general-purpose chip.

(3) The memory 1003 is configured to provide storage space, and the storage space may store data such as an operating system and a computer program. The memory 1003 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Functions and actions of the modules or the units in the processing apparatus 100 listed above are merely examples for descriptions.

In a possible design, functional units in the processing apparatus 100 may be configured to implement the foregoing data processing method. For example, the processing apparatus 100 may replace the data processing apparatus in the method embodiment shown in FIG. 2. Herein, detailed descriptions are omitted to avoid repetition.

In a possible design, functional units in the processing apparatus 100 may be configured to implement the foregoing behavior detection method. For example, the processing apparatus 100 may replace the behavior detection apparatus in the method embodiment shown in FIG. 6. Herein, detailed descriptions are omitted to avoid repetition.

Optionally, the processor 1001 may be a processor (referred to as a dedicated processor for ease of differentiation) that is specially configured to perform the foregoing method, or may be a processor (referred to as a dedicated processor for ease of differentiation) that invokes a computer program to perform the foregoing method. Optionally, the at least one processor may further include both a dedicated processor and a general-purpose processor.

Optionally, when a computing device includes at least one memory 1003, if the processor 1001 invokes a computer program to implement the foregoing power supply control method, the computer program may be stored in the memory 1003.

An embodiment of this application further provides a chip system. The chip system includes a processor and a communication interface. The communication interface is configured to receive and/or send data, and/or the communication interface is configured to provide an input and/or an output for the processor. The chip system is configured to implement the foregoing data processing method and/or behavior detection method, for example, the methods described in embodiments shown in FIG. 2 and FIG. 6.

An embodiment of this application further provides a terminal. The terminal includes one or more of the foregoing data processing apparatus, behavior detection apparatus, or processing apparatus.

In a possible implementation, the terminal may be an intelligent terminal or transportation means like a vehicle, an uncrewed aerial vehicle, or a robot. For example, certainly, the terminal may also be replaced with an industrial device, an entertainment device, or the like. The intelligent terminal is, for example, a mobile phone, a tablet computer, a notebook computer, a smart band, a smart watch, or smart glasses. The transportation means is, for example, a vehicle, a ship, aircraft, or a logistics robot. The industrial device is, for example, an industrial robot and a robotic arm. The entertainment device is, for example, a virtual reality (virtual reality, VR) device, a mixed reality (mixed reality, MR) device, a massage chair, or a 4D cinema motion seat pod. A device to which an electrical connector is applied is not strictly limited in this application.

An embodiment of this application further provides a server. The server includes one or more of the foregoing data processing apparatus, behavior detection apparatus, or processing apparatus.

An embodiment of this application further provides a roadside apparatus. The roadside apparatus includes one or more of the foregoing data processing apparatus, behavior detection apparatus, or processing apparatus.

An embodiment of this application further provides a computer-readable storage medium. The computer-readable storage medium stores an instruction. When the instruction is run on at least one processor, the foregoing data processing method and/or behavior detection method are/is implemented, for example, the methods described in embodiments shown in FIG. 2 and FIG. 6 are implemented.

An embodiment of this application further provides a computer program product. The computer program product includes computer instructions, and when being executed by a computing device, the computer program product implements the foregoing data processing method and/or behavior detection method, for example, the methods described in embodiments shown in FIG. 2 and FIG. 6.

It should be noted that names of the apparatus, the parameter, and the information in this application are merely examples, and in a specific implementation process, the names may be randomly replaced. For example, the behavior detection apparatus may also be referred to as a detection apparatus or a processing apparatus.

In embodiments of this application, the term like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including any combination of a single item (piece) or plural items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, the first position and the second position are merely for ease of describing the position, but do not indicate differences in position representation manners, occurrence sequences, importance degrees, and the like of the first position and the second position.

According to the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

## Claims

1. A data processing method, wherein the method comprises:
obtaining a natural language text, wherein the natural language text comprises a description of a physical position; and
determining, based on the natural language text, a logical language text for detecting a detected object, wherein the logical language text comprises an atomic proposition and a position operator, and the position operator represents an event at the physical position.

2. The method according to claim 1, wherein the natural language text indicates a behavior specification.

3. The method according to claim 2, wherein the logical language text is used to judge whether the detected object complies with the behavior specification.

4. The method according to any one of claims 1 to 3, wherein the position operator comprises at least one of the following operators:
previous position Xₚᵣₑₚₒₛ, next position Xₚₒₛ, until Uₚᵣₑₚₒₛ, reverse until Uₚₒₛ, direction always Gₚᵣₑₚₒₛ, always Gₚₒₛ, once Fₚᵣₑₚₒₛ, finally Fₚₒₛ, always G_{pos(p1, p2)} within a distance range from a first value p₁ to a second value p₂, and existing F_{pos(p1, p2)} within a distance range from a first value p₁ to a second value p₂, wherein the first value and the second value are position parameters.

5. The method according to any one of claims 1 to 4, wherein determining, based on the natural language text, the logical language text for detecting the detected object comprises:
determining the logical language text based on the natural language text and specification indication information of a first scenario, wherein the logical language text is used to detect a behavior of the detected object in the first scenario.

6. The method according to any one of claim 5, wherein the specification indication information of the first scenario comprises an application distance range of a behavior specification in the first scenario; and
the position operator comprises a position parameter, and the position parameter is determined based on the application distance range.

7. The method according to any one of claims 1 to 6, wherein the logical language text is used to detect a behavior of the detected object within a first distance range on a first road;
the first distance range comprises a start point and an end point in a road coordinate system of the first road, a positive direction of the road coordinate system represents a normal traveling direction along the first road, and the road coordinate system comprises an origin; and
the position operator comprises a first value and a second value, the first value is a distance between the start point and the origin in the normal traveling direction of the first road, and the second value is a distance between the end point and the origin in the normal traveling direction of the first road.

8. The method according to claim 7, wherein the origin is a current position of the detected object or a position of a projection of a current position of the detected object onto the road coordinate system.

9. The method according to any one of claims 1 to 8, wherein the logical language text further comprises one or more of a logical operator and a temporal operator.

10. A behavior detection method, wherein the method comprises:
obtaining behavior information of a terminal; and
determining, based on the behavior information of the terminal and a logical language text, whether a behavior of the terminal complies with a behavior specification, wherein the logical language text comprises an atomic proposition and a position operator, and the position operator represents an event at a physical position.

11. The method according to claim 10, wherein the position operator comprises at least one of the following operators:
previous position Xₚᵣₑₚₒₛ, next position Xₚₒₛ, until Uₚᵣₑₚₒₛ, reverse until Uₚₒₛ, direction always Gₚᵣₑₚₒₛ, always Gₚₒₛ, once Fₚᵣₑₚₒₛ, finally Fₚₒₛ, always Gₚₒₛ(p₁,p₂) within a distance range from a first position to a second position, and existing Fₚₒₛ(p₁,p₂) within a distance range from a first position to a second position, wherein the first value and the second value are position parameters.

12. The method according to claim 10 or 11, wherein the method further comprises:
sending violation alert information to the terminal when the behavior of the terminal does not comply with the behavior specification, wherein the violation alert information indicates information about the behavior specification that is violated and/or indicates how to comply with the behavior specification.

13. The method according to claim 10 or 11, wherein the method further comprises:
outputting a behavior detection result, wherein the behavior detection result indicates whether the behavior of the terminal complies with the behavior specification.

14. The method according to claim 10 or 11, wherein the behavior information of the terminal further comprises information about an intelligent driving function related to the behavior of the terminal, and the method further comprises:
outputting function feedback information when the behavior of the terminal does not comply with the behavior specification, wherein the function feedback information indicates the intelligent driving function and the behavior specification that is violated by the terminal, and the function feedback information is used to update the intelligent driving function.

15. The method according to any one of claims 10 to 14, wherein a form of the logical language text is: conditional proposition → behavioral proposition, and → represents derivation; and
determining, based on the behavior information of the terminal and the logical language text, whether the behavior of the terminal complies with the behavior specification comprises:
determining a logical value of the conditional proposition and a logical value of the behavioral proposition based on the behavior information of the terminal; and
if the conditional proposition is true and the logical value of the behavioral proposition is true, determining that the behavior of the terminal complies with the behavior specification; or
if the conditional proposition is true and the logical value of the behavioral proposition is false, determining that the behavior of the terminal does not comply with the behavior specification.

16. The method according to any one of claims 10 to 15, wherein the logical language text indicates a behavior specification in a first scenario, and determining, based on the behavior information of the terminal and the logical language text, whether the behavior of the terminal complies with the behavior specification comprises:
determining, based on the behavior information of the terminal and the logical language text, whether a behavior of the terminal in the first scenario complies with the behavior specification in the first scenario.

17. The method according to claim 16, wherein the method further comprises:
determining the logical language text based on a natural language text and specification indication information of the first scenario, wherein the natural language text is a behavior specification described in a natural language.

18. The method according to claim 17, wherein the specification indication information of the first scenario comprises an application distance range of the behavior specification in the first scenario, the position operator comprises a position parameter, and the position parameter is determined based on the application distance range.

19. The method according to any one of claims 10 to 18, wherein the logical language text is used to detect a behavior of the detected object within a first distance range on a first road;
the first distance range comprises a start point and an end point in a road coordinate system of the first road, a positive direction of the road coordinate system represents a normal traveling direction along the first road, and the road coordinate system comprises an origin; and
the position operator comprises a first value and a second value, the first value is a distance between the start point and the origin in the normal traveling direction of the first road, and the second value is a distance between the end point and the origin in the normal traveling direction of the first road.

20. The method according to any one of claims 10 to 19, wherein the logical language text further comprises one or more of a logical operator and a temporal operator.

21. A data processing apparatus, wherein the data processing apparatus comprises an obtaining module and a processing module, and the processing apparatus is configured to implement the method according to any one of claims 1 to 9.

22. A detection apparatus, wherein the detection apparatus comprises an obtaining module and a processing module, and the processing apparatus is configured to implement the method according to any one of claims 10 to 20.

23. A data processing apparatus, wherein the data processing apparatus comprises a processor and a communication interface;
the communication interface is configured to receive and/or send data, and/or the communication interface is configured to provide an input and/or an output for the processor; and
the processor is configured to perform the method according to any one of claims 1 to 9.

24. A detection apparatus, wherein the chip comprises a processor and a communication interface;
the communication interface is configured to receive and/or send data, and/or the communication interface is configured to provide an input and/or an output for the processor; and
the processor is configured to perform the method according to any one of claims 10 to 20.

25. A terminal, wherein the terminal comprises the detection apparatus according to claim 24.

26. The terminal according to claim 25, wherein the terminal is a vehicle, an uncrewed aerial vehicle, or a robot.

27. A computer-readable storage medium, wherein the computer-readable storage medium stores an instruction, and when the instruction is run on at least one processor, the method according to any one of claims 1 to 9 is implemented.

28. A computer-readable storage medium, wherein the computer-readable storage medium stores an instruction, and when the instruction is run on at least one processor, the method according to any one of claims 10 to 21 is implemented.
